# EUROPEAN PATENT APPLICATION

(11) **EP 4 681 680 A1**
(43) Date of publication of application: **21.01.2026**
(21) Application number: 24770561.9
(22) Date of filing: 01.03.2024
(51) Int. Cl.: A61C 17/02

(54) **NOZZLE FOR ORAL CAVITY CLEANING DEVICE AND ORAL CAVITY CLEANING DEVICE**

(30) Priority: 14.03.2023 JP 2023039901
(71) Applicant: Panasonic Intellectual Property Management Co., Ltd., Kadoma-shi, Osaka 571-0057 (JP)
(72) Inventor: NINOMIYA Yuki, Kadoma-shi, Osaka 571-0057 (JP); INOUE Hiroki, Kadoma-shi, Osaka 571-0057 (JP); TANIGUCHI Shinichi, Kadoma-shi, Osaka 571-0057 (JP); SHINODA Hiroki, Kadoma-shi, Osaka 571-0057 (JP); FUJII Yukari, Kadoma-shi, Osaka 571-0057 (JP); KUNITA Tomohiro, Kadoma-shi, Osaka 571-0057 (JP)
(74) Representative: Novagraaf International SA
(86) International application number: PCT/JP2024/007700
(87) International publication number: WO 2024/190450

(57) **Abstract**

The present disclosure provides a nozzle with which an oral cavity cleaning effect can be further improved and which is usable for an oral cavity cleaning device. The present disclosure also includes an oral cavity cleaning device comprising the nozzle. The nozzle (4) according to the present disclose includes a nozzle housing (40) in which a flow path (P1) having an inflow port (P1a) and a discharge port (P1b) is formed. The nozzle (4) is configured such that a fluid introduced into the flow path (P1) from the inflow port (P1a) and having a pressure of 1 MPa or more and 4 MPa or less is discharged from the discharge port (P1b) at a discharge load of 0.19 N or more and 0.38 N or less.

## Description

### BACKGROUND

### 1. Technical Field

The present disclosure relates to a nozzle for an oral cavity cleaning device. The present disclosure also relates to an oral cavity cleaning device.

### 2. Description of the Related Art

As a nozzle for an oral cavity cleaning device, as disclosed in Patent Literature 1, there is known a nozzle including a flow path forming part provided with a flow path including an inflow port and an outflow port. In the nozzle for the oral cavity cleaning device disclosed in Patent Literature 1, the flow path forming part includes a first configuration part including a first flow path, and a second configuration part provided downstream of the first configuration part and including a second flow path narrower than the first flow path. In addition, the flow path forming part includes a third configuration part provided downstream of the second configuration part and including a third flow path wider than the second flow path, and a fourth configuration part provided downstream of the third configuration part and including a fourth flow path.

The fourth flow path is formed with a narrowing part that narrows the flow path, and the downstream side of the narrowing part is formed so as to widen from the narrowing part toward the outflow port side. In this way, cavitation is generated in the cleaning liquid, and the cleaning effect in the oral cavity can be enhanced.

### Citation List

### Patent Literature

Patent Literature 1: Unexamined Japanese Patent Publication No.: 2018-126283

### SUMMARY

### (Technical Problem)

As described above, also in the conventional technique, it is possible to enhance the cleaning effect in the oral cavity; however, it is preferable to further enhance the cleaning effect in the oral cavity.

Therefore, an object of the present disclosure is to provide a nozzle for an oral cavity cleaning device and an oral cavity cleaning device in which an effect of cleaning an oral cavity can be further improved.

### (Solution to Problem)

A nozzle for an oral cavity cleaning device according to one aspect of the present disclosure includes a nozzle housing in which a flow path having an inflow port and a discharge port is formed, wherein the nozzle is configured such that a fluid introduced into the flow path from the inflow port and having a pressure of 1 MPa or more and 4 MPa or less is discharged from the discharge port with a discharge load of 0.19 N or more and 0.38 N or less.

An oral cavity cleaning device according to one aspect of the present disclosure includes the nozzle for the oral cavity cleaning device described above, and a grip part on which the nozzle for an oral cavity cleaning device is configured to be mounted in an attachable and detachable manner.

### Advantageous Effects of Invention

In the present disclosure, it is possible to obtain a nozzle for an oral cavity cleaning device and an oral cavity cleaning device in which an effect of cleaning an oral cavity can be further improved.

### BRIEF DESCRIPTION OF DRAWINGS

FIG. 1 is a diagram schematically illustrating an example of an oral cavity cleaning device according to an embodiment.
FIG. 2 is a diagram schematically illustrating a pump and a pump driving mechanism of the oral cavity cleaning device according to the embodiment.
FIG. 3 is a perspective view of a pump driving mechanism with a piston of the oral cavity cleaning device according to the embodiment as viewed from one direction.
FIG. 4 is a perspective view of the pump driving mechanism with the piston of the oral cavity cleaning device according to the embodiment as viewed from another direction.
FIG. 5 is a side view showing the pump driving mechanism with the piston of the oral cavity cleaning device according to the embodiment.
FIG. 6 is a plan view showing the pump driving mechanism with the piston of the oral cavity cleaning device according to the embodiment.
FIG. 7 is a cross-sectional view taken along line A-A of FIG. 6.
FIG. 8 is a diagram comparing a piston displacement amount and a liquid delivery amount in a case where a time required for a delivery step is shorter than a time required for a suction step with those of a normal pump.
FIG. 9 is a diagram comparing a current value of a motor when an assist mechanism is provided and a current value of the motor when the assist mechanism is not provided.
FIG. 10 is a side view illustrating an example of the nozzle according to the embodiment.
FIG. 11 is a diagram illustrating an example of the nozzle according to the embodiment and is a longitudinal sectional view taken along a plane along a flow path axis.
FIG. 12 is a diagram for explaining an arrangement relationship between a first narrowed flow path and a widened flow path included in an example of the nozzle according to the embodiment.
FIG. 13 is a diagram schematically illustrating an example of a method of measuring the pressure inside the nozzle.
FIG. 14 is a graph illustrating a relationship between the pressure inside the nozzle and a load of a discharge water amount of the nozzles according to the embodiment and the comparative example.
FIG. 15 is a graph illustrating a relationship between a distance from the tip of the nozzles according to the embodiment and the comparative example to a dirty surface and the dirt removal amount.
FIG. 16 is a graph illustrating a relationship between a discharge flow rate and a dirt removal amount of the nozzles according to the embodiment and the comparative example.
FIG. 17 is a diagram illustrating an example of the nozzle according to the embodiment, and is a cross-sectional view taken along a plane orthogonal to the flow path axis.
FIG. 18 is a diagram illustrating an example of a method of manufacturing a nozzle, and is a cross-sectional view illustrating a state in which a first molded member and a second molded member are prepared.
FIG. 19 is a diagram illustrating an example of the method of manufacturing the nozzle, and is a transverse cross-sectional view illustrating a state in which the first molded member and the second molded member are overlapped with each other.
FIG. 20 is a diagram illustrating an example of the method of manufacturing the nozzle, and is a transverse cross-sectional view illustrating a state in which a joining member is formed using a mold in an inflow space formed by the first molded member and the second molded member which have been overlapped with each other.
FIG. 21 is a diagram illustrating an example of the nozzle according to the embodiment, and is a cross-sectional view of a part where a first narrowed flow path is present, the cross-sectional view being taken along a plane orthogonal to the flow path axis.
FIG. 22 is a diagram illustrating a first modification of the nozzle according to the embodiment, and is a cross-sectional view taken along a plane orthogonal to the flow path axis.
FIG. 23 is a diagram illustrating a second modification of the nozzle according to the embodiment, and is a cross-sectional view taken along a plane orthogonal to the flow path axis.
FIG. 24 is a diagram schematically illustrating an example of the nozzle that can be manufactured by an example of the method of manufacturing the nozzle.
FIG. 25 is a diagram schematically illustrating an example of an appearance shape and a flow path shape of the nozzle that can be manufactured by an example of the method of manufacturing the nozzle.
FIG. 26 is a diagram schematically illustrating another example of the appearance shape and the flow path shape of the nozzle that can be manufactured by the example of the method of manufacturing the nozzle.
FIG. 27 is a diagram schematically illustrating an example of a cross-sectional shape of an appearance and a flow path of the nozzle that can be manufactured by an example of the method of manufacturing the nozzle.
FIG. 28 is a diagram schematically illustrating another example of cross-sectional shape of the appearance and the flow path of the nozzle that can be manufactured by the example of the method of manufacturing the nozzle.
FIG. 29 is a perspective view of an oral cavity cleaning device according to a first modification of the embodiment as viewed from one direction.
FIG. 30 is a perspective view of the oral cavity cleaning device according to the first modification of the embodiment as viewed from another direction.
FIG. 31 is a perspective view illustrating a grip part and a nozzle according to a first modification of the embodiment.
FIG. 32 is a diagram schematically illustrating an oral cavity cleaning device according to a second modification of the embodiment.

### DESCRIPTION OF EMBODIMENT

Hereinafter, an embodiment will be described in detail with reference to the drawings. However, unnecessarily detailed description may be omitted. For example, detailed description of well-known matters or redundant description of substantially the same configuration may be omitted.

The accompanying drawings and the following description are provided to allow those skilled in the art to fully understand the present disclosure, and are not intended to limit the subject matter described in the claims.

In the following embodiments, a vertical direction of the oral cavity cleaning device is defined and described in a state in which a tip part of the nozzle is on the upper side and an extending direction of a stem part matches with the vertical direction. In addition, a direction in which the liquid is discharged from the discharge part is defined as a front side.

### (Embodiment)

Hereinafter, a nozzle for an oral cavity cleaning device and an oral cavity cleaning device according to the embodiment will be described.

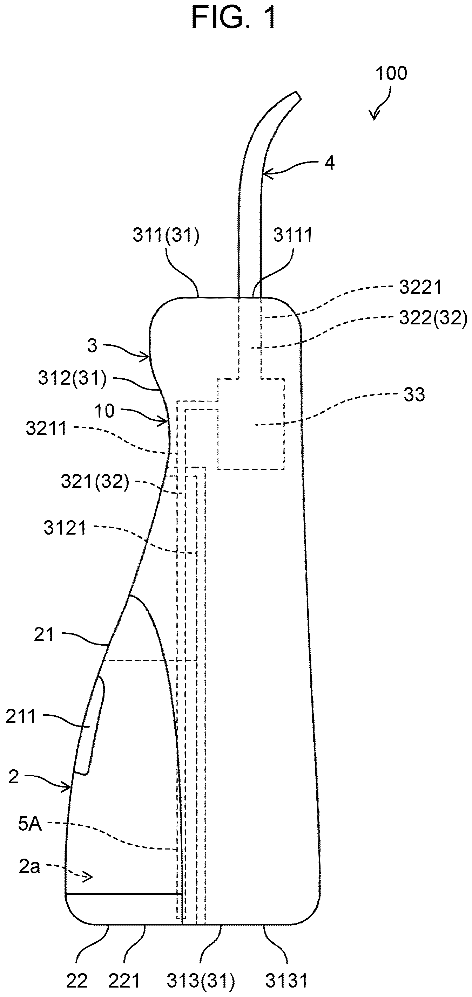

FIG. 1 is a diagram schematically illustrating an example of an oral cavity cleaning device 100 according to the embodiment. As shown in FIG. 1, oral cavity cleaning device 100 according to the present embodiment includes a liquid storage tank 2 (that is, an example of a liquid storage unit), a device main body 3, and a nozzle 4.

The liquid storage tank 2 is formed in a bottomed cylindrical or hollow-prism shape that opens upward and is closed on the lower end thereof, and a storage part 2a in which liquid can be stored is formed inside the liquid storage tank 2. Although water can be used as the liquid stored in the storage part 2a, the liquid is not limited to water, and various liquids can be used. For example, it is possible to use a cleaning liquid in which a cleaning agent is mixed in water.

Further, in the present embodiment, the liquid storage tank 2 is mounted to the device main body 3 in an attachable and detachable way, and the liquid storage tank 2 can be cleaned in a state of being separated from the device main body 3. This makes it possible to keep the liquid storage tank 2 cleaner. The liquid storage tank 2 may be formed of, for example, a polypropylene resin so as to be washed by a dishwasher.

In the present embodiment, the liquid storage tank 2 includes a tubular body 21 having a substantially tubular shape that opens upward and downward, and a bottom wall 22 that closes the lower opening of the tubular body 21. A lateral part of the liquid storage tank 2 (more specifically, on the tubular body 21) is formed with a liquid supply hole (not shown) through which liquid can be injected into the storage part 2a, and the liquid supply hole is closed by a liquid supply lid 211. In this way, the liquid can be supplied to the storage part 2a in the liquid storage tank 2 in a state where the liquid storage tank 2 is attached to the device main body 3.

On the other hand, the device main body 3 includes a housing 31 (that is, an example of a case) constituting an outer shell. The housing 31 has a substantially cylindrical or hollow-prism shape elongated in the vertical direction. Main components such as a pump 33, which will be described later, are accommodated in an inner space of the housing 31. The housing 31 is constricted at a substantially central part in the longitudinal direction, and has a shape easily gripped by a user's hand when oral cavity cleaning device 100 is used. Therefore, in the present embodiment, the constricted part at the substantially central part in the longitudinal direction of the housing 31 serves as a grip part 10 that can be gripped by a user or with their hand.

In the present embodiment, the housing 31 includes a top wall 311, a substantially cylindrical or hollow-prism peripheral wall 312 extending downward from an outer peripheral edge of the top wall 311, and a bottom wall 313 connected to a lower end of the peripheral wall 312.

The top wall 311 is formed with a nozzle mounting part 3111, and a nozzle 4 that is formed in a hollow elongated shape and is capable of discharging (more specifically, jetting) liquid from the tip thereof is mounted on the nozzle mounting part 3111 in an attachable and a detachable manner.

Further, the peripheral wall 312 is provided with a button (not shown) capable of detaching the nozzle 4 from the housing 31 (that is, an example of the device main body 3) and a power switch (not shown) for starting or stopping the oral cavity cleaning device 100 (that is, for switching between on and off of the power of the oral cavity cleaning device 100).

Further, in the present embodiment, a recessed part 3121 recessed inward is formed in a lower part of the peripheral wall 312, and the liquid storage tank 2 is mounted to the recessed part 3121 in an attachable and a detachable manner.

When the liquid storage tank 2 is mounted in the recessed part 3121, a bottom surface 221 of the bottom wall 22 of the liquid storage tank 2 and a bottom surface 3131 of the bottom wall 313 of the housing 31 are substantially flush with each other. This allows the oral cavity cleaning device 100 to stand in a state where the nozzle 4 faces upward when oral cavity cleaning device 100 is not in use.

A liquid flow path 32 for supplying the liquid stored in the liquid storage tank 2 to the nozzle 4 is formed inside the housing 31 (that is, an example of the device main body 3).

In the present embodiment, the liquid flow path 32 includes a suction path 321 disposed upstream of the liquid flow path 32 and a delivery path 322 disposed downstream of the liquid flow path 32, and the suction path 321 and the delivery path 322 are connected to each other via the pump 33. As described above, in the present embodiment, the pump 33 is disposed in the middle of the liquid flow path 32. As such the pump 33, for example, a piston-pump-type pump can be used. However, the type of the pump is not particularly limited, and various types of pumps can be used.

Here, in the present embodiment, the suction path 321 is defined by a hollow tube 3211 such as a pipe, and the tube 3211 is formed so as to penetrate the peripheral wall 312 and have a tip (more specifically, an upstream end) facing the recessed part 3121. A flexible tube 5A is attached to an end (more specifically, an upstream end) of the tube 3211 facing the recessed part 3121, and the liquid stored in the liquid storage tank 2 is supplied into the liquid flow path 32 via the tube 5A. Thus, by using the flexible tube 5A, the liquid storage tank 2 can be smoothly attached to and detached from the device main body 3.

The delivery path 322 is also defined by a hollow tube 3221 such as a pipe. The tube 3221 is formed so as to penetrate the top wall 311 and open upward, and the tip (more specifically, the downstream end) of the tube 3221 communicates with the nozzle 4.

As described above, in the present embodiment, the liquid flow path 32 is provided in the housing 31 (that is, in the device main body 3) in a state where the one end thereof communicates with the inner space of the nozzle mounting part 3111 and the other end faces the recessed part 3121. The tube 5A is attached to the other end facing the recessed part 3121. Thus, the liquid in the liquid storage tank 2 introduced through the tube 5A is supplied to the nozzle 4 through the liquid flow path 32.

In the present embodiment, the tube 5A is integrally attached to the tip (more specifically, the upstream end) of the tube 3211, and is disposed in the storage part 2a of the liquid storage tank 2 in a state where the liquid storage tank 2 is attached to the device main body 3. The liquid stored in the storage part 2a is introduced into the housing 31 (that is, into the device main body 3) through the tube 5A.

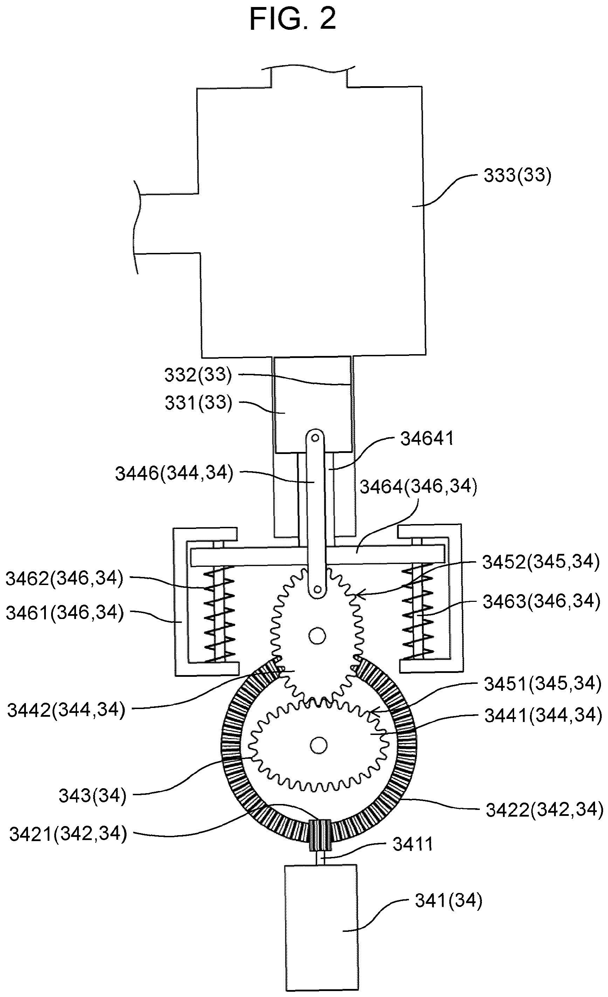

FIG. 2 is a diagram schematically showing the pump 33 and a pump driving mechanism 34 of the oral cavity cleaning device 100 according to the embodiment. As shown in FIG. 2, the pump driving mechanism 34 is disposed inside the housing 31 (that is, an example of the device main body 3). When the pump 33 is operated by the pump driving mechanism 34, the liquid in the storage part 2a is sucked up by the tube 5A, passes through the liquid flow path 32, and is discharged (more specifically, jetted) from the tip of the nozzle 4.

As described above, the oral cavity cleaning device 100 according to the present embodiment includes the pump 33 and the pump driving mechanism 34 that drives the pump 33, and is a device that discharges the liquid by driving the pump 33.

In the present embodiment, the pump 33 includes a pump chamber 333 communicating with the suction path 321 and the delivery path 322, a cylinder 332 formed to communicate with the lower end of the pump chamber 333, and a piston 331 disposed in the cylinder 332.

A suction valve (not shown) is provided between the pump chamber 333 and the suction path 321, and a discharge valve (not shown) is provided between the pump chamber 333 and the delivery path 322.

The piston 331 is coupled to the pump driving mechanism 34, and is configured to reciprocate linearly in the vertical direction (that is, an example of the term "one direction") in the cylinder 332 by the pump driving mechanism 34. When the piston 331 linearly reciprocates in the vertical direction in the cylinder 332, the volume of the pump chamber 333 changes.

Specifically, when the piston 331 moves downward in the cylinder 332, the volume of the pump chamber 333 increases, and the liquid in the liquid storage tank 2 flows into the pump chamber 333 via the tube 5A and the suction path 321. Thereafter, when the piston 331 moves upward in the cylinder 332 in a state where the liquid flows into the pump chamber 333, the volume of the pump chamber 333 decreases, and the liquid in the pump chamber 333 is supplied to the nozzle 4 via the delivery path 322. Then, the liquid supplied to the nozzle 4 is discharged (more specifically, jetted) from the tip of the nozzle 4 to the outside thereof.

As described above, in the present embodiment, the piston 331 moves downward in the cylinder 332 to perform a suction step of sucking the liquid into the pump chamber 333, and moves upward to perform a delivery step of delivering the liquid from the pump chamber 333 to the outside (more specifically, the nozzle 4). That is, the piston 331 linearly reciprocates between an uppermost position and a lowermost position, so that the suction step and the delivery step are alternately performed. Therefore, when the piston 331 reciprocates once in the vertical direction from the uppermost position, the suction step and the delivery step are performed once.

This configuration make it possible to discharge the liquid intermittently from the tip of the nozzle 4 attached to the device main body 3.

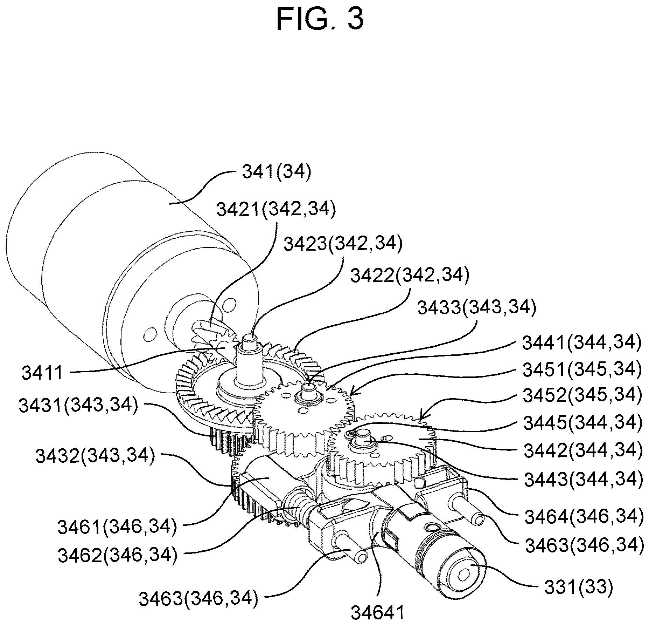

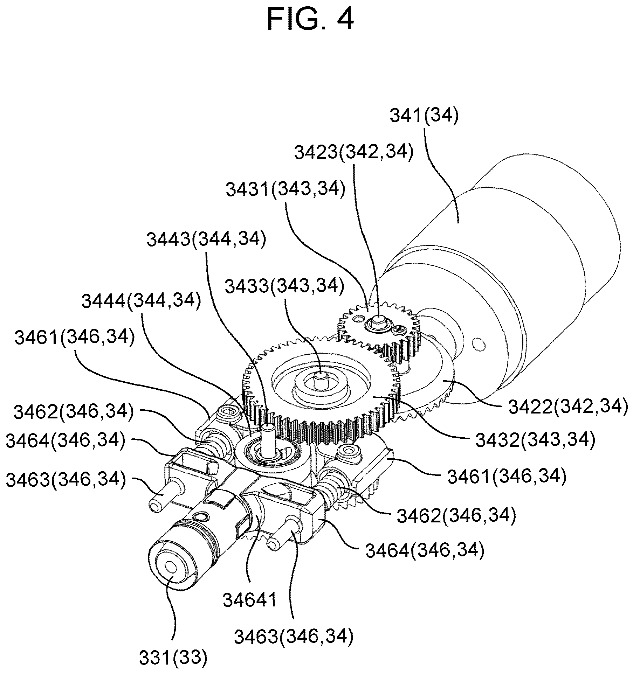

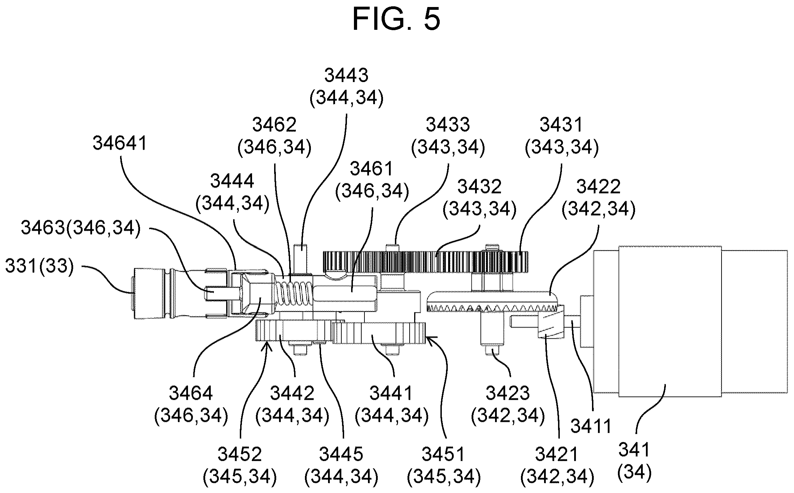

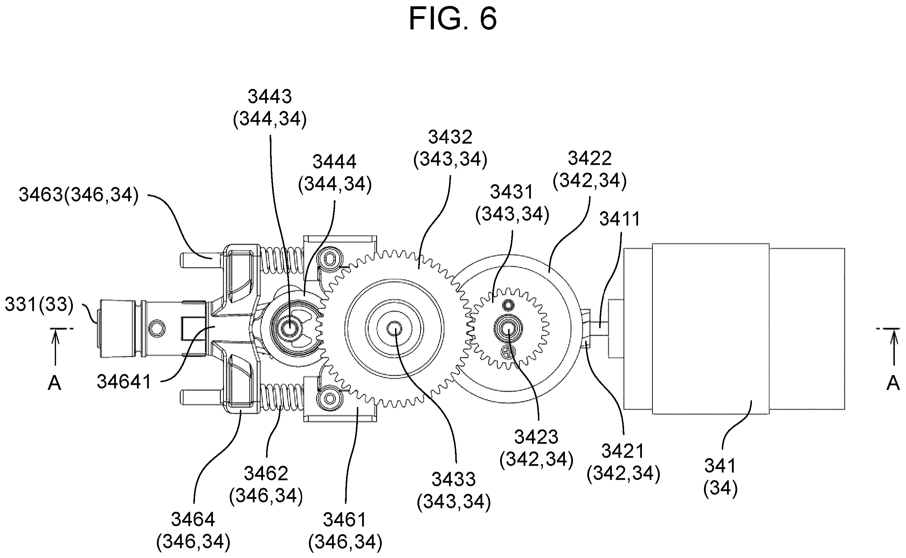

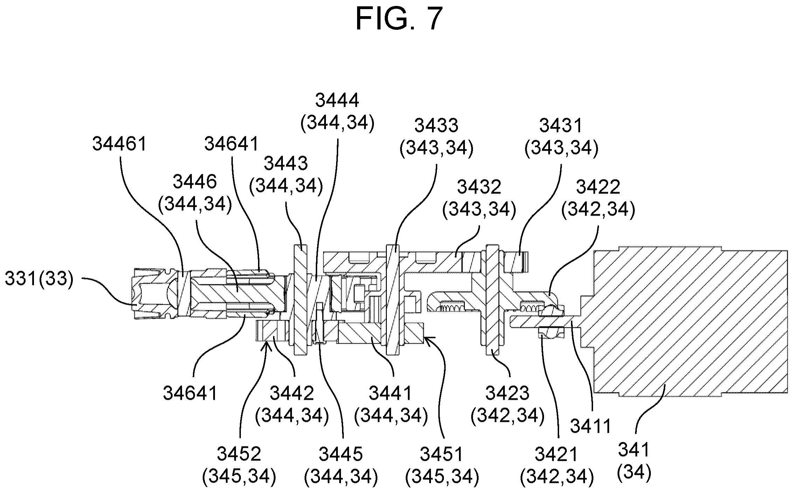

In the present embodiment, as shown in FIGS. 2 to 7, the pump driving mechanism 34 includes a motor 341. By driving the motor 341, the piston 331 linearly reciprocates in the vertical direction in the cylinder 332. FIG. 3 is a perspective view of the pump driving mechanism 34 with the piston 331 of the oral cavity cleaning device 100 according to the embodiment as viewed from one direction. FIG. 4 is a perspective view of the pump driving mechanism 34 with the piston 331 of the oral cavity cleaning device 100 according to the embodiment as viewed from another direction. FIG. 5 is a side view showing the pump driving mechanism 34 with the piston 331 of the oral cavity cleaning device 100 according to the embodiment. FIG. 6 is a plan view showing the pump driving mechanism 34 with the piston 331 of the oral cavity cleaning device 100 according to the embodiment. FIG. 7 is a cross-sectional view taken along line A-A of FIG. 6.

Specifically, the pump driving mechanism 34 includes a motor 341 and a conversion mechanism 344 that converts a rotational motion of the motor 341 into a reciprocating linear motion. The piston 331 is connected to the conversion mechanism 344, and the piston 331 linearly reciprocates in the vertical direction in the cylinder 332. The motor 341 is driven by power supplied from a battery (for example, a rechargeable battery or a dry battery) accommodated in the device main body 3 or from an external power.

Further, in the present embodiment, the pump driving mechanism 34 includes a deceleration mechanism 342 that decelerates the rotational speed of the motor 341, and a transmission mechanism 343 that transmits the rotational motion decelerated by the deceleration mechanism 342 to the conversion mechanism 344. Therefore, in the present embodiment, the rotational speed (that is, the number of rotations per unit time) of the motor 341 is reduced to a predetermined rotational speed (that is, the number of rotations per unit time) by the deceleration mechanism 342, and then the rotational speed is converted into the reciprocating linear motion by the conversion mechanism 344.

At this time, by adjusting the rate of deceleration by the deceleration mechanism 342, it is possible to set the time required for the piston 331 to reciprocate once (that is, the time for performing one suction step and one delivery step) to be a desired time. In consideration of usability of the oral cavity cleaning device 100, the number of piston pulsations (that is, the number of reciprocations / minute of the piston 331) is preferably 500rpm to 3000rpm. Therefore, the time required for one reciprocation of the piston 331 (that is, the time required for one suction step and one delivery step), that is, the time required for one cycle of the pump 33 is preferably 0.02 seconds to 0.12 seconds.

In the present embodiment, as illustrated in FIGS. 3 to 7, the deceleration mechanism 342 includes a pinion gear 3421 that is attached to a motor shaft 3411 of the motor 341 and rotates in conjunction with the rotation of the motor shaft 3411, and a deceleration gear 3422 that meshes with the pinion gear 3421. Further, the deceleration mechanism 342 includes a first output shaft 3423 that supports the deceleration gear 3422 and rotates in conjunction with the rotation of the deceleration gear 3422. By setting the gear ratio between the pinion gear 3421 and the deceleration gear 3422 to a predetermined value, the rotation speed (that is, the number of rotations per unit time) of the motor 341 is reduced to a predetermined rotation speed (that is, the number of rotations per unit time).

The transmission mechanism 343 is connected to the first output shaft 3423. Specifically, the transmission mechanism 343 includes a first transmission gear 3431 that is attached to the first output shaft 3423 and rotates in conjunction with the rotation of the first output shaft 3423. The transmission mechanism 343 includes a second transmission gear 3432 that meshes with the first transmission gear 3431. Further, the transmission mechanism 343 includes a second output shaft 3433 that supports the second transmission gear 3432 and rotates in conjunction with the rotation of the second transmission gear 3432. The rotation of the motor 341 decelerated by the deceleration mechanism 342 is transmitted to the conversion mechanism 344 via the second output shaft 3433.

The conversion mechanism 344 includes a first gear 3441 that is attached to the second output shaft 3433 and rotates in conjunction with the rotation of the second output shaft 3433. The conversion mechanism 344 includes a second gear 3442 that meshes with the first gear 3441. The conversion mechanism 344 further includes a third output shaft 3443 that supports the second gear 3442 and rotates in conjunction with the rotation of the second gear 3442.

The conversion mechanism 344 includes a cam 3444 that is attached to the third output shaft 3443 and rotates in conjunction with the rotation of the third output shaft 3443, and a rod 3446 that reciprocates in the vertical direction by the cam 3444. The cam 3444 is a member that converts the rotation of the motor 341 into an operation force in the axial direction, and is fixed to the second gear 3442 by a screw 3445 in the present embodiment. The rod 3446 is linearly reciprocated in the vertical direction of the device main body 3 by the operation force in the axial direction converted by the cam 3444. As shown in FIG. 2, the rod 3446 may be attached to the second gear 3442 directly (that is, without a cam).

The piston 331 is attached to the tip (more specifically, the upper end) of the rod 3446 by a connecting shaft 34461. This allows the piston 331 to reciprocate linearly in the vertical direction in the cylinder 332.

Here, in the present embodiment, the pump driving mechanism 34 includes the assist mechanism 346 that assists the movement of the piston 331.

The assist mechanism 346 includes a spring support 3461, a pair of shafts 3463 fixed to both ends of the spring support 3461, and a slider 3464 attached to the pair of shafts 3463 so as to be slidable in the axial direction. At this time, a pair of coil springs 3462 (that is, an example of a biasing member) are attached to the pair of shafts 3463, respectively, and the slider 3464 is biased upward by the pair of coil springs 3462 (that is, an example of a biasing member). As described above, in the present embodiment, the assist mechanism 346 includes the coil spring 3462 (that is, an example of a biasing member) that biases the piston 331 upward (that is, in a direction included in the term "one direction").

A pressing part 34641 of the slider 3464 is brought into contact with the lower end of the cylinder 332, and the cylinder 332 is biased upward by the elastic restoring force of the pair of coil springs 3462 (that is, an example of a biasing member). The biasing member may be any member that can be elastically deformed, and not only a spring such as a coil spring but also a member such as rubber can be used.

The pump driving mechanism 34 is not limited to the above-described configuration, and may have various configurations. For example, the deceleration gear 3422 and the first transmission gear 3431 may be integrated, or the second transmission gear 3432 and the first gear 3441 may be integrated. It is also possible to integrate the second gear 3442 and the cam 3444.

The pump driving mechanism 34 does not have to include the assist mechanism 346 that assists the movement of the piston 331.

In the present embodiment, the oral cavity can be cleaned more efficiently.

Specifically, the pump driving mechanism 34 includes a speed change mechanism 345 that makes the moving speed of the piston 331 when the delivery step is performed different from the moving speed of the piston 331 when the suction step is performed. The piston 331 is reciprocated once so that the time required for the delivery step is shorter than the time required for the suction step.

In the present embodiment, the speed change mechanism 345 uses a non-circular gear, so that the moving speed of the piston 331 when the delivery step is performed is different from the moving speed of the piston 331 when the suction step is performed. That is, in the present embodiment, the speed change mechanism 345 has non-circular gears. Specifically, the first gear 3441 and the second gear 3442 which mesh with each other are non-circular gears. The non-circular gear may be formed of a metal material or a resin material.

Further, in the present embodiment, an elliptical gear is used as the non-circular gear, and the speed change mechanism 345 includes the elliptical gear as the non-circular gear. Specifically, the first gear 3441 is an elliptical gear 3451, and the second gear 3442 is an elliptical gear 3452.

By appropriately setting the oblateness of the elliptical gears 3451 and 3452, the positions to which the output shafts (more specifically, the second output shaft 3433 and the third output shaft 3443) are attached, and the gear ratio between the elliptical gear 3451 and the elliptical gear 3452, the ratio between the time required for the delivery step and the time required for the suction step becomes 1 : X (where, X>1). X is a value of a feed ratio. At this time, in consideration of the cleaning effect in the oral cavity, the range of the feed ratio is preferably 1.5 to 5.0. That is, when the ratio of the time required for the delivery step to the time required for the suction step is 1:X, the value of X is preferably set to be 1.5 or more and 5.0 or less.

As described above, in the present embodiment, the pump driving mechanism 34 includes the speed change mechanism 345 that makes the moving speed of the piston 331 when the delivery step is performed and the moving speed of the piston 331 when the suction step is performed different from each other. The speed change mechanism 345 includes non-circular gears (more specifically, the first gear 3441 and the second gear 3442). The speed change mechanism 345 may include only one non-circular gear or three or more non-circular gears.

Further, in the present embodiment, the speed change mechanism 345 includes the elliptical gears 3451 and 3452 as non-circular gears, and the speed change mechanism 345 is constituted by the two elliptical gears 3451 and 3452. Only one elliptical gear may be provided, or three or more elliptical gears may be provided.

The non-circular gear is not limited to the elliptical gear, and various non-circular gears can be used. For example, the gear may have a polygonal shape with rounded vertices, or may have a shape with a concavely curved part.

Further, in the present embodiment, since the ratio between the time required for the delivery step and the time required for the suction step is merely changed by using the pair of elliptical gears, the time required for one cycle of the pump 33 is the same as that in the case of the normal pump 33 (more specifically, in the case of using the circular gears).

When the pump 33 is driven by the pump driving mechanism 34 having such a configuration, it is possible to increase the moving speed (that is, the absolute value of the moving speed) of the piston 331 during the delivery step and decrease the moving speed (that is, the absolute value of the moving speed) of the piston 331 during the suction step. That is, the time required for the delivery step can be made shorter than the time required for the suction step.

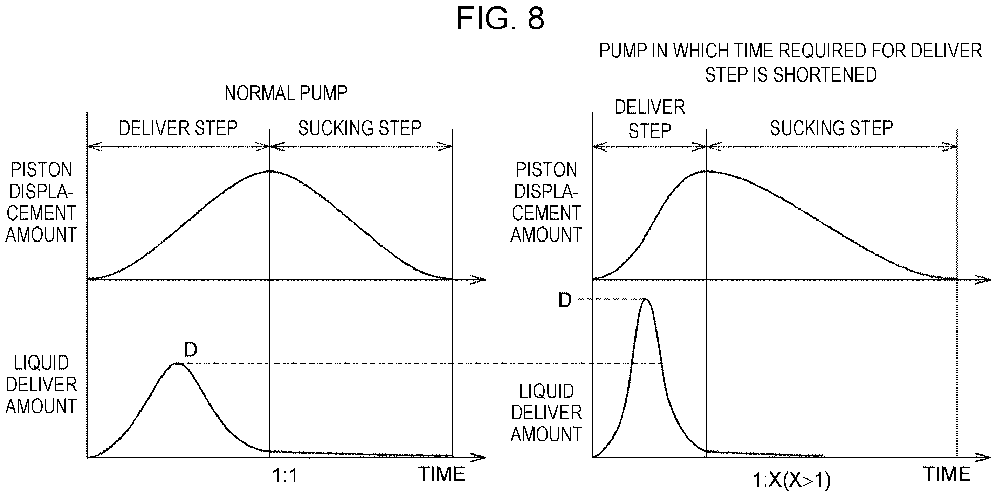

As a result, as shown in FIG. 8, the maximum delivery amount D can be made larger than that of a normal pump in which the ratio of the time required for the delivery step to the time required for the suction step is 1:1. FIG. 8 is a diagram comparing the piston displacement amount and the liquid delivery amount in a case where the time required for the delivery step is shorter than the time required for the suction step with those of a normal pump. Here, in the present embodiment, the maximum value of the delivery amount at the moment of the delivery step is set as the maximum delivery amount D. That is, the time required for the delivery step is equally divided by a predetermined minute time which is infinitely close to zero, and the maximum delivery flow rate among the delivery flow rates delivered in the respective sections is set as the maximum delivery amount D. Therefore, when the delivery amount at each moment when the delivery step is performed draws a graph as shown in FIG. 8, the value of the delivery amount at the uppermost point in the graph is the maximum delivery amount D.

In the present embodiment, the total delivery amount of the liquid in the delivery step is the same in both cases. At this time, in consideration of cleaning efficiency of the oral cavity, usability of the oral cavity cleaning device 100, the total delivery amount of the liquid in the delivery step of the device is preferably 50 ml/min to 450 ml/min.

As described above, when the oral cavity cleaning device 100 equipped with the pump driving mechanism 34 according to the present embodiment is used, it is possible to reduce as much as possible the discharge of useless liquid that is not used for cleaning and to more efficiently clean the oral cavity. In addition, even when the total delivery amount of the liquid delivered during one reciprocation of the piston 331 is the same, the maximum delivery amount D can be increased. Therefore, the discharge pressure of the liquid discharged from the oral cavity cleaning device 100 increases, and the oral cavity can be cleaned more efficiently.

Here, in the present embodiment, as described above, the time required for the delivery step is shorter than the time required for the suction step. Therefore, the assist mechanism 346 according to the present embodiment assists the movement of the piston 331 when the delivery step, which is one of the delivery step and the suction step that takes a shorter time to reciprocate the piston once, is performed.

In this way, when the delivery step in which the moving speed of the piston 331 increases and the load of the motor 341 increases is performed, the movement of the piston 331 is assisted, and thus the load of the motor 341 can be reduced. However, when the assist mechanism 346 is used, the load of the motor 341 in the process having a shorter time decreases, but the load of the motor 341 in the process having a longer time increases.

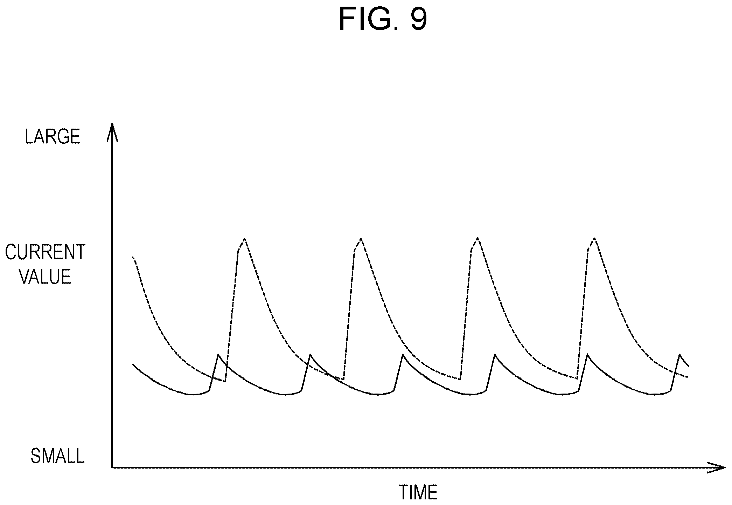

Therefore, when such an assist mechanism 346 is used, it is preferable to appropriately set the timing at which the movement of the piston 331 is assisted by the assist mechanism 346 and the force assisted by the assist mechanism 346. In this way, as shown in FIG. 9, the current value of the motor 341 (that is, the load applied to the motor 341) can be made smaller (that is, the load can be reduced) in the case where the assist mechanism 346 is used (that is, the case indicated by the solid line in FIG. 9) than in the case where the assist mechanism 346 is not used (that is, the case indicated by the broken line in FIG. 9). FIG. 9 is a diagram comparing the current value of the motor 341 when the assist mechanism 346 is provided and the current value of the motor 341 when the assist mechanism 346 is not provided. The assist ratio is preferably set in the range of 10 to 60. That is, the force assisted by the assist mechanism 346 is preferably 10% to 60% of the motor output.

It is also possible to use a piston-pump-type pump in which the ratio of the time required for the delivery step to the time required for the suction step is 1:1.

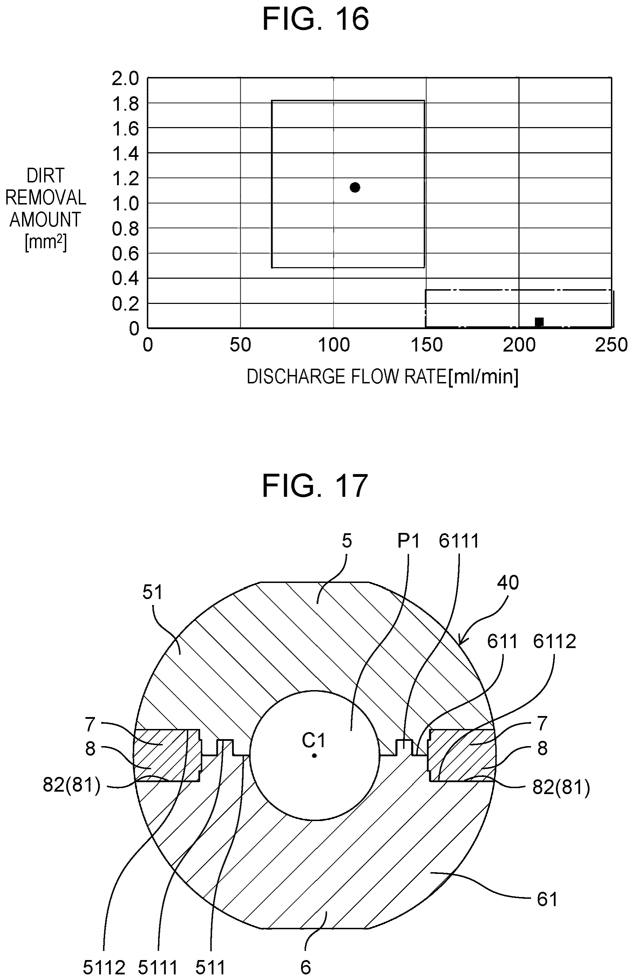

The nozzle 4 includes a nozzle housing 40 in which a flow path P1 having an inflow port P1a and a discharge port P1b is formed. The nozzle housing 40 includes a connection part 41 having the inflow port P1a formed at the lower end thereof and mounted to the grip part 10 in an attachable and detachable manner, and a housing main body 42 provided continuously to the upper end of the connection part 41 and having the discharge port P1b formed at the tip (more specifically, an upper end) thereof. In the present embodiment, the nozzle housing 40 is formed to have a substantially circular cross-sectional shape when cut along a plane orthogonal to the longitudinal axis (more specifically, the flow path axis C1 of the flow path P1, see FIG. 17, which will be described later).

The housing main body 42 is a part exposed from the grip part 10 (more specifically, the housing 31) in a state where the connection part 41 is inserted and fitted into the nozzle mounting part 3111, and the housing main body 42 includes a stem part 421 elongated in the vertical direction. In addition, the housing main body 42 includes a curved part 422 which is continuously provided at the upper end of the stem part 421 and is curved in a direction intersecting the extending direction (that is, the vertical direction) of the stem part 421, and a tip part 423 which is continuously provided at the tip of the curved part 422. As described above, in the present embodiment, the nozzle housing 40 (that is, one element of the nozzle 4) has a shape in which the tip thereof is bent.

In the present embodiment, the nozzle 4 having such a shape is attached to the grip part 10 (more specifically, the housing 31), the bent tip part 423 is inserted into the oral cavity, and the pump 33 is driven, whereby the fluid in the liquid storage tank 2 is supplied to the flow path P1 via the liquid flow path 32. The fluid supplied to the flow path P1 passes through the flow path P1 and is discharged (more specifically, jetted) to the outside from the discharge port P1b formed at the tip of the tip part 423. In this manner, the inside of the oral cavity can be cleaned by discharging (more specifically, jetting) the fluid from the discharge port P1b to the outside thereof and applying the fluid to, for example, at least one of teeth or gums in the oral cavity.

Although water can be used as the fluid discharged (more specifically, jetted) into the oral cavity, the fluid is not limited to water, and various liquids can be used. For example, it is possible to use a cleaning liquid in which a cleaning agent is mixed in water.

In the oral cavity cleaning device 100 according to the present embodiment, as described above, the fluid is not continuously discharged from the discharge port P1b, but the fluid is intermittently discharged from the discharge port P1b. The pulsation frequency at this time may be, for example, 8.3 Hz to 50 Hz, more preferably 10 Hz to 30 Hz.

Here, in the present embodiment, the cleaning effect in the oral cavity can be further improved. Specifically, the nozzle 4 is configured such that a fluid (for example, a liquid such as water or a gas such as air) introduced into the flow path P1 from the inflow port P1a and having a pressure of 1 MPa or more and 4 MPa or less is discharged from the discharge port P1b with a discharge load of 0.19 N or more and 0.38 N or less.

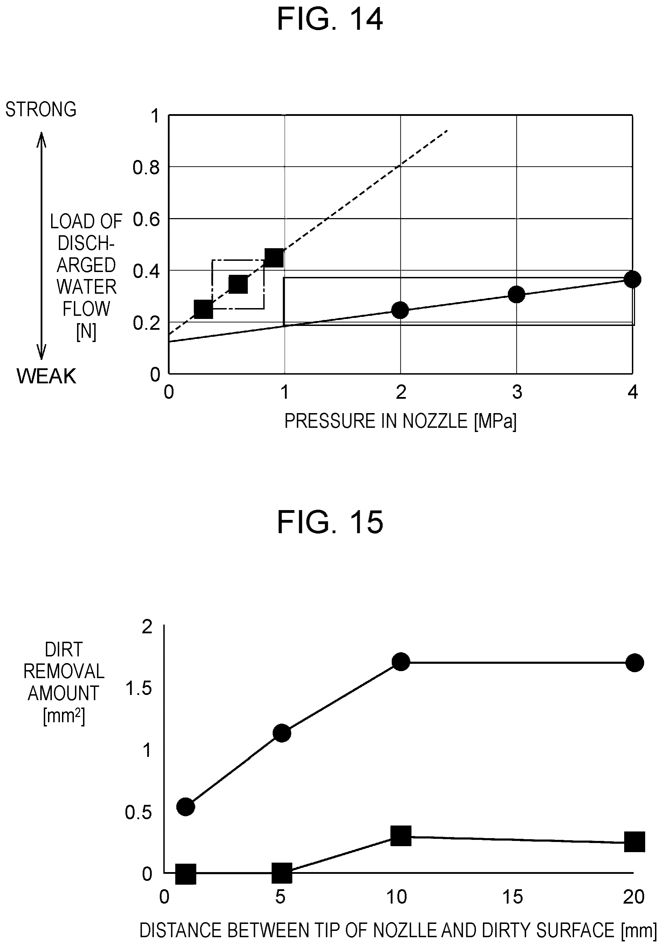

That is, as shown in FIG. 14, the pressure introduced into the flow path P1 is increased but the discharge load of the fluid discharged from the discharge port P1b is reduced as compared with the case of using the conventional nozzle. FIG. 14 is a graph showing the relationship between the pressure inside the nozzle and the load of the amount of discharged water in the nozzle 4 according to the present embodiment and a nozzle according to a comparative example (that is, a conventional nozzle). In addition, as a conventional nozzle, the nozzle disclosed in the above-mentioned literature listed in the section of the citation list is used.

In FIG. 14, a region indicated by a one-dot chain line square is a range of the load of the pressure inside the nozzle and the amount of discharged water when the conventional nozzle is used, and a region indicated by a solid line square is a range of the load of the pressure inside the nozzle and the amount of discharged water when the nozzle 4 according to the present embodiment is used.

From FIG. 14, it is understood that the pressure introduced into the flow path P1 is larger and the discharge load of the fluid discharged from the discharge port P1b is smaller in the case of using the nozzle 4 according to the present embodiment than in the case of using the conventional nozzle. From the graphs of the solid line and the broken line, it is understood that, when the pressure inside the nozzle is the same, the discharge load of the fluid discharged from the discharge port P1b is smaller in the case of using the nozzle 4 according to the present embodiment than in the case of using the conventional nozzle.

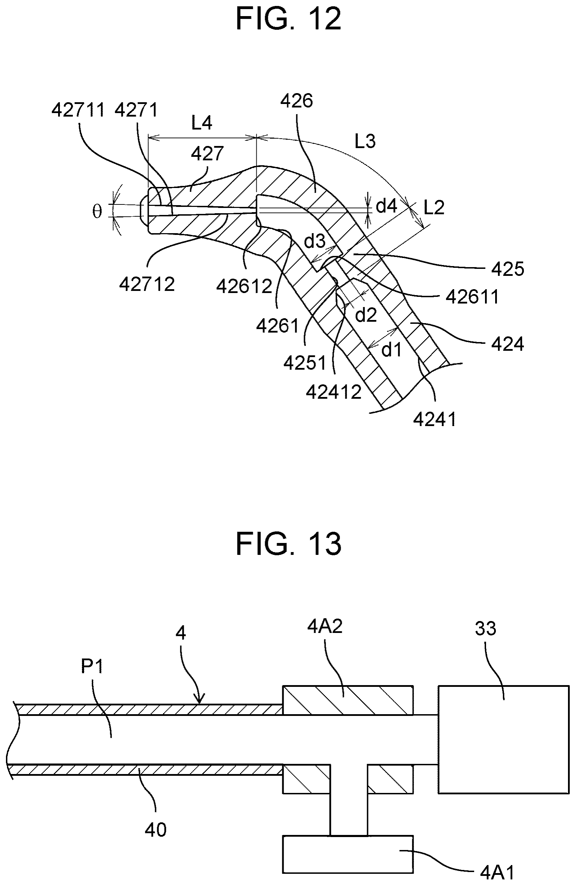

FIG. 13 is a diagram schematically illustrating an example of a method of measuring the pressure inside the nozzle 4. In the present embodiment, as shown in FIG. 13, the pressure inside the nozzle is obtained by fixing a pressure gauge 4A1 to the upstream side of the flow path P1 by a connection jig 4A2 and measuring the pressure of the fluid with the pressure gauge 4A1. At this time, the maximum value of the pressure measured by the pressure gauge 4A1 is set as the pressure inside the nozzle. On the other hand, the discharge load of the fluid discharged from the discharge port P1b is measured by placing a load cell at a position 1 mm to 1 cm away from the nozzle tip and applying the fluid to the surface of the load cell. The maximum load measured at this time is set as the discharge load of the fluid discharged from the discharge port P1b.

Then, how much dirt can be removed in each of the cases of using the nozzle 4 and the conventional nozzle was obtained by an experiment. Specifically, the distance from the tip of the nozzle to a dirty surface was changed, and the amount of dirt removed in each of the cases of using the nozzle 4 and the conventional nozzle was obtained. Note that, in the present embodiment, a state in which a fluid discharged from the nozzle is applied for 5 seconds to a plate to which substitute dirt (that is, an imitation of dirt in the oral cavity) has been attached is photographed, the photographed image is digitized by binarization processing, and a numerical value obtained from the digitized image is set as a dirt removal amount.

FIG. 15 is a graph illustrating the relationship between the distance from the tip of the nozzle 4 according to the embodiment and the nozzle according to the comparative example to the dirty surface and the dirt removal amount. FIG. 15 shows the calculation results of the dirt removal amount when each nozzle is used and the distance from the tip of the nozzle to the dirty surface is set to 1 mm, 5 mm, 10 mm, and 15 mm. In FIG. 15, a polygonal line connecting black squares is a graph showing the relationship between the distance from the tip of the nozzle to the dirty surface and the dirt removal amount when the conventional nozzle is used. A polygonal line connecting black circles is a graph showing the relationship between the distance from the tip of the nozzle to the dirty surface and the dirt removal amount when the nozzle 4 is used.

From the graph of FIG. 15, it is understood that the dirt removal amount is larger in the case of using the nozzle 4 according to the present embodiment than in the case of using the conventional nozzle, regardless of the distance from the tip of the nozzle to the dirty surface.

When the nozzle 4 according to the present embodiment is used, the flow rate of the fluid discharged per minute is about 70 mL to 150 mL. On the other hand, when the conventional nozzle is used, the flow rate of the fluid discharged per minute is about 150 mL to 250 mL.

Therefore, the relationship between the flow rate of the fluid discharged per minute and the dirt removal amount is as shown in FIG. 16. FIG. 16 is a graph showing the relationship between the discharge flow rate and the dirt removal amount of the nozzle 4 according to the embodiment and the nozzle according to the comparative example. In FIG. 16, a region indicated by a one-dot chain line square is a range of the flow rate and the dirt removal amount in the case of using the conventional nozzle, and a region indicated by a solid line square is a range of the flow rate and the dirt removal amount in the case of using the nozzle 4 according to the present embodiment.

From FIG. 16, it is understood that a larger amount of dirt can be removed with a smaller flow rate in the case of using the nozzle 4 according to the present embodiment than in the case of using the conventional nozzle.

As described above, as a result of intensive studies, the present inventors have found that when the fluid is discharged at a discharge load of 0.19 N or more and 0.38 N or less while the pressure of the fluid inside the nozzle is 1 MPa or more and 4 MPa or less, a large amount of dirt can be removed with a small flow rate.

Based on such knowledge, the nozzle 4 is provided with a configuration that causes a loss of the pressure of the fluid that has become 1 MPa or more and 4 MPa or less inside the nozzle 4, and the fluid is discharged with a gentle water flow and a small amount of water, thereby making it possible to further improve the cleaning effect in the oral cavity.

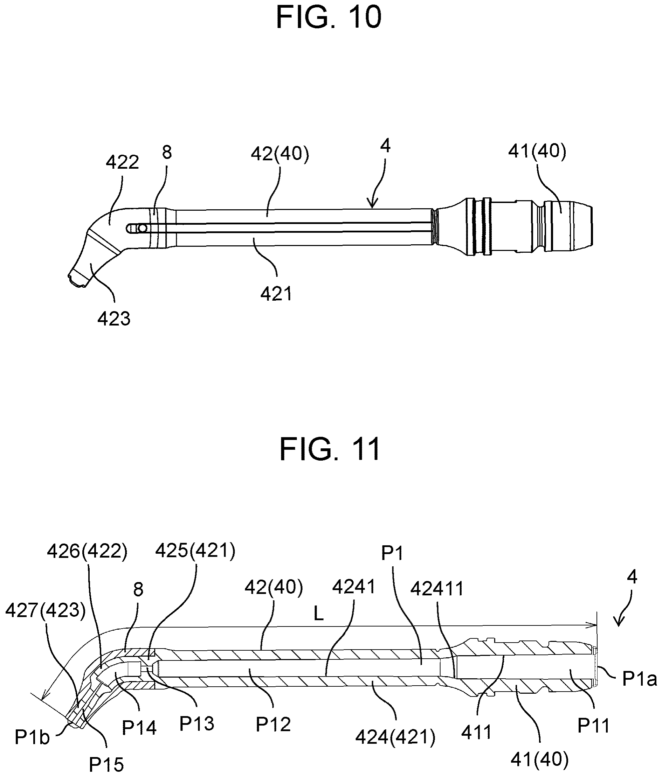

Specifically, as illustrated in FIGS. 11 and 12, the flow path P1 includes an introduction flow path P12 (that is, an example of a first flow path) which is provided continuously to a connection flow path P11 and into which the fluid is introduced from the connection flow path P11. FIG. 11 is a diagram illustrating an example of the nozzle 4 according to the embodiment and is a longitudinal sectional view taken along a plane along the flow path axis C1. FIG. 12 is a diagram illustrating an arrangement relationship between a first narrowed flow path P13 and a widened flow path P14 included in the example of the nozzle 4 according to the embodiment. In addition, the flow path P1 includes the first narrowed flow path P13 (more specifically, the first diameter-narrowed flow path, here, an orifice part) as the narrowed flow path which is continuously provided downstream of the introduction flow path P12 (that is, an example of the first flow path) and has a flow path cross-sectional area smaller than that of the introduction flow path P12 (that is, an example of the first flow path). Further, the flow path P1 includes the widened flow path P14 (more specifically, a diameter-widened flow path, here, a compression chamber) which is continuously provided downstream of the first narrowed flow path P13 and has a flow path cross-sectional area larger than that of the first narrowed flow path P13, and a second narrowed flow path P15 (more specifically, a second diameter-narrowed flow path, here, a discharge flow path) as a narrowed flow path which is continuously provided downstream of the widened flow path P14 and has a flow path cross-sectional area smaller than that of the widened flow path P14. Here, in the present embodiment, the areas of the flow path cross sections formed when the respective parts are cut along a plane orthogonal to the flow path axis C1 (see FIG. 17) are defined as the flow path cross-sectional area of the introduction flow path P12 (that is, an example of the first flow path), the flow path cross-sectional area of the first narrowed flow path P13, the flow path cross-sectional area of the widened flow path P14, and the flow path cross-sectional area of the second narrowed flow path P15, respectively.

In the present embodiment, the first narrowed flow path P13 is a small hole which is provided in the middle of the flow path P1 and through which the liquid can be jetted, and is a part having a function as an orifice part which generates a pressure difference between the liquid before passing through the first narrowed flow path P13 and the liquid after passing through the first narrowed flow path P13. In addition, the widened flow path P14 is a part having a function as a compression chamber that compresses a fluid (for example, a liquid or a gas) supplied to the inside thereof. The second narrowed flow path P15 communicates with the discharge port P1b and functions as a discharge flow path for discharging the liquid from the discharge port P1b. As described above, in the present embodiment, the narrowed flow path (more specifically, the orifice part) includes the first narrowed flow path P13 that is continuously provided downstream of the introduction flow path P12 (that is, an example of the first flow path) of the flow path P1 and has a flow path cross-sectional area smaller than that of the introduction flow path P12 (that is, an example of the first flow path), and the second narrowed flow path P15 located downstream of the first narrowed flow path P13. The first narrowed flow path P13 and the second narrowed flow path P15 are connected to each other via a widened flow path P14 having a larger flow path cross-sectional area than the first narrowed flow path P13 and the second narrowed flow path P15.

This configuration makes it possible to lose the pressure inside the nozzle 4 is more efficiently, and to discharge the fluid (for example, a liquid such as water or a gas such as air) more reliably from the discharge port P1b with a discharge load of 0.19 N or more and 0.38 N or less.

Further, by providing the first narrowed flow path P13 in the middle of the flow path P1, the gas (for example, air) drawn into the flow path P1 can be diffused when the gas is introduced from the first narrowed flow path P13 to the widened flow path P14. In this way, the liquid and the gas can be more efficiently pressurized and dissolved or mixed, and generation of droplets, fine bubbles (more specifically, bubbles of about several hundred micrometers), and cavitation bubbles can be increased.

In this way, by increasing the generation of droplets, fine bubbles, and cavitation bubbles, it is possible to increase shear force, pressure fluctuation, and vibration generated when the fluid discharged from the discharge port P1b is applied to a cleaning surface such as a tooth surface. That is, it is possible to further increase the force of removing the dirt attached to the tooth surface. As a result, the cleaning power is increased, and the cleaning effect in the oral cavity can be further improved.

In the present embodiment, the connection flow path P11 is a flow path defined by an inner wall surface 411 of the connection part 41, and the upstream end of the connection flow path P11 is the inflow port P1a.

Further, in the present embodiment, the housing main body 42 includes a first flow path forming part 424 which is continuously provided upstream of the connection part 41 and in which the introduction flow path P12 (that is, an example of the first flow path) is formed. In addition, the housing main body 42 includes a second flow path forming part 425 which is continuously provided upstream of the first flow path forming part 424 and in which the first narrowed flow path P13 is formed. Further, the housing main body 42 includes a third flow path forming part 426 which is continuously provided upstream of the second flow path forming part 425 and in which the widened flow path P14 is formed. The housing main body 42 includes a fourth flow path forming part 427 which is continuously provided upstream of the third flow path forming part 426 and in which the second narrowed flow path P15 is formed.

Here, the introduction flow path P12 (that is, an example of the first flow path) is a flow path defined by a first inner wall surface 4241 of the first flow path forming part 424, and an upstream end of the first inner wall surface 4241 is continuously provided to a downstream end of the inner wall surface 411 of the connection part 41. Further, in the present embodiment, an upstream side inclined surface 42411 inclined inward toward the downstream side is formed in the middle of the first inner wall surface 4241, and the introduction flow path P12 (that is, an example of the first flow path) is formed such that the flow path cross-sectional area is smaller on the downstream side than on the upstream side. That is, the introduction flow path P12 (that is, an example of the first flow path) has a shape including a large-diameter flow path on the upstream side, a small-diameter flow path on the downstream side, and a diameter-narrowed flow path connecting the large-diameter flow path and the small-diameter flow path. In the present embodiment, the flow path P1 is formed to have a substantially circular cross-sectional shape when cut along a plane orthogonal to the flow path axis C1, and the diameter d1 of the small-diameter flow path of the introduction flow path P12 (that is, an example of the first flow path) is about 2.9 mm.

The first narrowed flow path P13 is a flow path defined by a second inner wall surface 4251 of the second flow path forming part 425, and the upstream end of the second inner wall surface 4251 is connected to the downstream end of the first inner wall surface 4241. In the present embodiment, the downstream end of the first inner wall surface 4241 is a downstream inclined surface 42412 that is inclined inward toward the downstream side. In this way, the flow path cross-sectional area is gradually reduced (more specifically, while the diameter is gradually reduced), and the introduction flow path P12 (that is, an example of the first flow path) communicates with the first narrowed flow path P13. The downstream inclined surface 42412 may be replaced with a curved surface. At this time, it is preferable that the downstream inclined surface 42412 and the curved surface are connected to the upstream end of the second inner wall surface 4251 in a smoothly continuous state.

In the present embodiment, the first narrowed flow path P13 is formed to have substantially constant flow path cross-sectional area (more specifically, substantially constant diameter) from the upstream side thereof to the downstream side thereof. In the present embodiment, the diameter d2 of the first narrowed flow path P13 is about 1.0 mm. The opening area ratio between the first narrowed flow path P13 and the small-diameter flow path of the introduction flow path P12 (that is, an example of the first flow path) is preferably 1 : 1.5 to 3.

The entire length L of the nozzle housing 40 along the flow path axis C1 is preferably about 90 mm to about 120 mm. In the present embodiment, the length L2 of the second flow path forming part 425 along the flow path axis C1 is set to about 3.0 mm in a state where the entire length L is set to be within a range of about 90 mm to about 120 mm.

The widened flow path P14 is a flow path defined by a third inner wall surface 4261 of the third flow path forming part 426, and the upstream end of the third inner wall surface 4261 is continuously provided to the downstream end of the second inner wall surface 4251. In the present embodiment, the upstream end of the third inner wall surface 4261 is an upstream vertical surface 42611 perpendicular to the flow path axis C1. In the present embodiment, the diameter d3 of the widened flow path P14 is about 2.9 mm. In addition, in a state where the entire length L is in a range of about 90 mm to about 120 mm, the length L3 of the third flow path forming part 426 along the flow path axis C1 is set to about 7.5 mm.

The second narrowed flow path P15 is a flow path defined by a fourth inner wall surface 4271 of the fourth flow path forming part 427, and the downstream end of the second narrowed flow path P15 is the discharge port P1b. The upstream end of the fourth inner wall surface 4271 is connected to the downstream end of the third inner wall surface 4261. In the present embodiment, the downstream end of the third inner wall surface 4261 is a downstream vertical surface 42612 perpendicular to the flow path axis C1. In the present embodiment, the diameter d4 of the upstream end of the second narrowed flow path P15 is about 0.38 mm. The opening area of the upstream end of the second narrowed flow path P15 is preferably in the range of about 0.03mm² to about 0.196mm². The ratio of the diameter d1 of the small-diameter flow path of the introduction flow path P12 (that is, an example of the first flow path) to the diameter d4 of the upstream end of the second narrowed flow path P15 is preferably about 0.05 to about 0.25. Furthermore, it is preferable that the opening area ratio between the upstream end of the second narrowed flow path P15 and the small-diameter flow path of the introduction flow path P12 (that is, an example of the first flow path) is 1 : 1 to 15. This makes it possible to discharge the fluid (for example, a liquid such as water or a gas such as air) from the discharge port P1b with a discharge load of 0.19 N or more and 0.38 N or less by losing the pressure inside the nozzle 4.

Further, in the present embodiment, the length L4 of the fourth flow path forming part 427 along the flow path axis C1 is set to be about 8.5 mm in a state where the entire length L is set to be within a range of about 90 mm to about 120 mm.

Here, in the present embodiment, the connection flow path P11, the introduction flow path P12 (that is, an example of the first flow path), and the first narrowed flow path P13 are formed to be aligned on a straight line. That is, the flow path P1 is formed on a straight line in a part from the upstream end of the connection flow path P11 to the downstream end of the first narrowed flow path P13. As described above, in the present embodiment, the introduction flow path P12 (that is, an example of the first flow path) and the first narrowed flow path P13 are formed in the stem part 421.

In addition, in the present embodiment, the widened flow path P14 is formed to be curved from the upstream side to the downstream side, and the widened flow path P14 is formed in the curved part 422.

The second narrowed flow path P15 is formed along a straight line intersecting the direction in which the introduction flow path P12 (that is, an example of the first flow path) and the first narrowed flow path P13 extend, and the second narrowed flow path P15 is formed at the tip part 423.

Furthermore, in the present embodiment, the shape of the second narrowed flow path P15 is a tapered shape in which the downstream side thereof is widened. Thus, the fluid compressed in the widened flow path P14 and introduced into the second narrowed flow path P15 can be discharged from the discharge port P1b along the wall surface (more specifically, the fourth inner wall surface 4271) defining the second narrowed flow path P15. That is, the fluid is caused to flow along the tapered part, and a wider flow is formed in the second narrowed flow path P15. Specifically, when a Coanda effect occurs, the fluid vibrates so as to move along the wall surface, and the cleaning area is increased while the flow velocity at the time of discharge is maintained.

In addition, when the fluid is prevented from being separated from the fourth inner wall surface 4271, the generation amount of fine bubbles can be further increased.

However, if the taper angle θ of the second narrowed flow path P15 is too large, the fluid cannot be discharged from the discharge port P1b along the wall surface (more specifically, the fourth inner wall surface 4271) defining the second narrowed flow path P15. In such a case, the fluid is discharged only from the central part of the discharge port P1b, and the fluid having a core is applied to a cleaning surface such as a tooth surface. In this case, the fluid is applied to only a narrow range, resulting in a decrease in cleaning efficiency or an increase in surface pressure, resulting in a decrease in sensory evaluation during use.

Therefore, it is preferable to set an appropriate nozzle taper angle so that the fluid flows along the taper, cleaning is maintained, and the cleaning area is increased.

Therefore, in the present embodiment, the taper angle θ of the second narrowed flow path P15 is set to 0 degrees or more and 5 degrees or less. Specifically, the taper angle θ of the wall surface (more specifically, the fourth inner wall surface 4271) defining the second narrowed flow path P15 is set to 3 degrees. Thus, the fluid can be more reliably discharged from the discharge port P1b along the wall surface (more specifically, the fourth inner wall surface 4271) defining the second narrowed flow path P15. In this way, it is possible to more reliably prevent the fluid from being discharged only from the central part of the discharge port P1b and prevent the fluid having a core from being applied to the cleaning surface such as the tooth surface. As a result, it is possible to more reliably suppress a decrease in cleaning efficiency due to the application of the fluid only to a narrow range, or a decrease in sensory evaluation during use due to an increase in surface pressure.

As described above, in the present embodiment, the shape of the second narrowed flow path P15 is a tapered shape in which the downstream side thereof is wide and the taper angle θ is 0 degrees or more and 5 degrees or less, so that the fluid can be applied to a wider range of the cleaning surface such as the tooth surface in a state where the cleaning power (that is, an example of the dirt removal efficiency) is maintained. That is, a fluid having high cleaning power (that is, an example of dirt removal efficiency) can be applied to a wider range. This makes it possible to clean the oral cavity more effectively and efficiently.

In the present embodiment, a case where the taper angle θ of the second narrowed flow path P15 is 0 degrees is also included. In this case, the second narrowed flow path P15 has a constant cross-sectional shape from the upstream side thereof to the downstream side thereof, and the flow path cross-sectional area (more specifically, the cross-sectional area) at any part from the upstream side to the downstream side has a constant value (more specifically, a constant diameter). Specifically, a first cross-sectional line 42711 and a second cross-sectional line 42712 of the fourth flow path forming part 427 facing each other extend in parallel. Here, the first cross-sectional line 42711 and the second cross-sectional line 42712 are lines of intersection between a cross section and the fourth inner wall surface 4271 when the fourth flow path forming part 427 is cut along a plane (that is, a cut plane) along the flow path axis C1.

As described above, in the present embodiment, the second narrowed flow path P15 in which the taper angle θ is 0 degrees is also included in the tapered shape in which the downstream side thereof is widened.

Furthermore, in the present embodiment, the nozzle housing 40 is formed using resin (for example, amorphous resin or polypropylene). As described above, in the present embodiment, the second flow path forming part 425 is formed of the same material as at least one of the first flow path forming part 424 or the third flow path forming part 426.

In this way, it is possible to more reliably suppress formation of an unintended unevenness and gap in at least one of the coupling part between second flow path forming part 425 and first flow path forming part 424 or the coupling part between second flow path forming part 425 and third flow path forming part 426 (more specifically, the coupling part between the adjacent inner wall surfaces). As a result, it is possible to more reliably suppress occurrence of unnecessary pressure loss, and it is possible to suppress a decrease in cleaning power as much as possible.

The nozzle housing 40 is integrally formed of resin. Therefore, in the present embodiment, the second flow path forming part 425 is formed integrally with at least one of the first flow path forming part 424 or the third flow path forming part 426.

In this way, it is not necessary to form the first narrowed flow path P13 by inserting a separate component into the flow path P1, and thus it is possible to more easily obtain the nozzle 4 having the first narrowed flow path P13. In addition, in a case where the first narrowed flow path P13 is formed using a separate component, a fine gap is formed in the flow path P1, a useless pressure loss occurs, and the cleaning power may be reduced. However, when the second flow path forming part 425 is formed integrally with at least one of the first flow path forming part 424 or the third flow path forming part 426, it is possible to more reliably suppress the formation of a fine gap in the flow path P1, and it is possible to more reliably suppress the occurrence of unnecessary pressure loss. As a result, a decrease in cleaning power can be suppressed as much as possible.

In addition, when the first narrowed flow path P13 is formed using a separate component, in a case where a metal component is used, at least one of rust or corrosion may occur due to a fluid flowing inside, and in a case where a cleaning agent is used, a black liquid generated by an oxide film may be discharged from the discharge port P1b. In contrast, when the first narrowed flow path P13 (that is, the flow path included in the second flow path forming part 425) is formed of a resin as in the present embodiment, the occurrence of rust or corrosion due to the fluid flowing inside is suppressed. In addition, when the nozzle housing 40 is formed using a resin having chemical resistance, it is possible to prevent the black liquid from being discharged from the discharge port P1b, and it is possible to prevent the appearance quality from being impaired.

In addition, when the first narrowed flow path P13 is formed using resin instead of metal, the weight of the nozzle 4 can be reduced, and the manufacturing cost can be reduced.

In addition, when the nozzle housing 40 is formed using a resin, the degree of freedom of the shape and the degree of freedom of the method can be improved. In addition, since the coloring of the resin is relatively easy, it is possible to adapt the nozzle housing 40 to various designs.

Further, when the nozzle housing 40 is manufactured by resin molding, there is an advantage that dimensional accuracy is easily obtained.

When the second flow path forming part 425 is formed integrally with at least one of the first flow path forming part 424 or the third flow path forming part 426, the strength of the nozzle housing 40 can be further improved. As a result, even when the fluid is introduced from the inflow port P1a into the flow path P1 at a high pressure of 1 MPa or more and 4 MPa or less, it is possible to more reliably suppress deformation and damage of the nozzle housing 40.

In particular, since the first narrowed flow path P13 is prevented from being moved by the fluid as in a case where the first narrowed flow path P13 is formed using a separate component, it is possible to further improve the strength of the nozzle housing 40.

As described above, in the present embodiment, the nozzle housing 40 is integrally formed using resin. In this manner, the nozzle housing 40 is formed using one material (here, resin).

A flow path P1 is formed inside the nozzle housing 40. In the present embodiment, the flow path P1 formed inside the nozzle housing 40 has a complicated shape so that the internal pressure and the discharge load have the above-described relationship.

As described above, when the nozzle housing 40 having a complicated flow path shape is manufactured, it is preferable that the nozzle housing 40 can be manufactured more easily.

Therefore, in the present embodiment, the configuration of the nozzle housing 40 having a complicated flow path shape can be more easily manufactured.

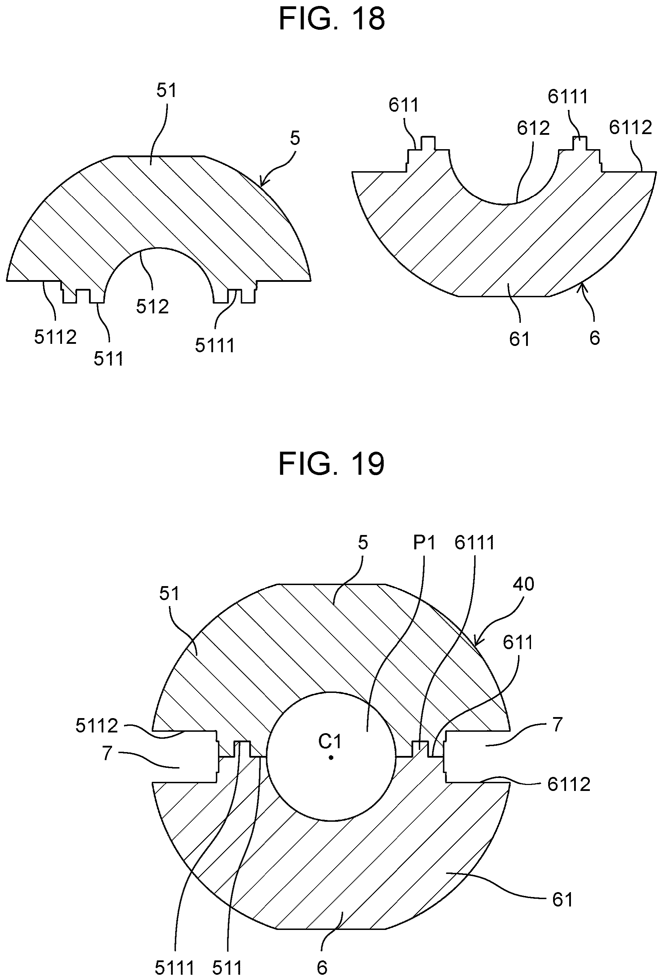

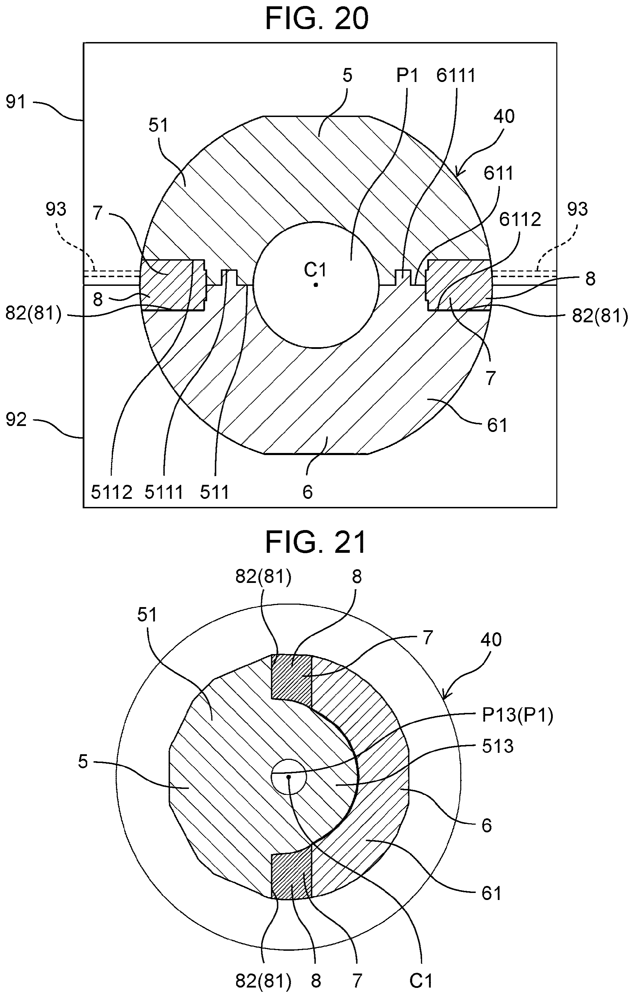

Specifically, as illustrated in FIG. 18, the nozzle housing 40 includes a first molded member 5 in which a first recessed part 512 constituting a part of the flow path P1 is formed, and a second molded member 6 in which a second recessed part 612 constituting a part of the flow path P1 is formed and which is joined to the first molded member 5. As shown in FIG. 20, a joint surface 81 between the first molded member 5 and the second molded member 6 extends along the flow path axis C1 of the flow path P1. FIG. 18 is a diagram illustrating an example of a method of manufacturing the nozzle 4, and is a transverse cross-sectional view illustrating a state in which the first molded member 5 and the second molded member 6 are prepared. FIG. 19 is a diagram illustrating an example of a method of manufacturing the nozzle 4, and is a transverse cross-sectional view illustrating a state in which the first molded member 5 and the second molded member 6 are overlapped with each other. FIG. 20 is a diagram illustrating an example of a method of manufacturing the nozzle 4, and is a cross-sectional view illustrating a state in which a joining member is formed using a mold in an inflow space 7 formed by the first molded member 5 and the second molded member 6 that are overlapped with each other.

As described above, when the first molded member 5 and the second molded member 6 are joined to each other to form the flow path P1 and the joint surface 81 is arranged along the flow path axis C1 of the flow path P1, the flow path P1 can be formed inside the nozzle housing 40 by overlapping and joining the first molded member 5 and the second molded member 6. Therefore, it is possible to more easily obtain the nozzle housing 40 having a complicated flow path shape.

In the present embodiment, the first molded member 5 includes a semicircular first wall part 51, and a semicircular first recessed part 512 is formed in a diameter part of the semicircular first wall part 51. A surface connected to the curved surface defining the semicircular first recessed part 512 is the first contact surface 511.

Similarly, the second molded member 6 includes a semicircular second wall part 61, and a semicircular second recessed part 612 is formed in a diameter part of the semicircular second wall part 61. A surface connected to the curved surface defining the semicircular second recessed part 612 is a second contact surface 611.

As described above, in the present embodiment, the first contact surface 511 is formed in the first molded member 5, and the second contact surface 611 that comes into contact with the first contact surface 511 is formed in the second molded member 6.

Further, in the present embodiment, a recessed part serving as a first positioning part 5111 is formed in a central part of the first contact surface 511. A protrusion serving as a second positioning part 6111 that engages with the first positioning part 5111 to position the first molded member 5 and the second molded member 6 is formed at a central part of the second contact surface 611.

In this way, when the first molded member 5 and the second molded member 6 are joined to each other to form the joint surface 81, it is possible to more reliably suppress positional deviation between the first molded member 5 and the second molded member 6.

Further, in the present embodiment, the first cutout part 5112 is formed outside the first contact surface 511 in the first wall part 51, and the second cutout part 6112 is formed outside the second contact surface 611 in the second wall part 61.

Thus, as shown in FIG. 19, when the first contact surface 511 and the second contact surface 611 are brought into contact with each other while the first positioning part 5111 and the second positioning part 6111 are engaged with each other in a state where the first recessed part 512 and the second recessed part 612 face each other, the inflow space 7 as the secondary flow path is formed.

The joining member 8 is formed by causing a resin to flow into the inflow space 7 and fixing the resin. Thus, the joint surface 81 extending along the flow path axis C1 of the flow path P1 is formed.

At this time, in the present embodiment, the first molded member 5 and the second molded member 6 are joined by thermal welding. In other words, the joint surface 81 between the first molded member 5 and the second molded member 6 serves as the thermally welded part 82. In this way, the joining strength can be improved as compared with the case where the joint surface 81 is formed by vibration welding, and the strength of the nozzle housing 40 can be further improved.

It is not necessary to join the first molded member 5 and the second molded member 6 by thermal welding, and the first molded member 5 and the second molded member 6 can be joined by various methods such as vibration welding.

The nozzle housing 40 having such a configuration can be formed by, for example, the following method.

First, as shown in FIG. 18, the first molded member 5 and the second molded member 6 are formed. The first molded member 5 and the second molded member 6 can be, for example, resin molded products molded by pouring a resin into a mold.

Next, as shown in FIG. 19, in a state where the first recessed part 512 and the second recessed part 612 face each other, the first contact surface 511 and the second contact surface 611 are brought into contact with each other while the first positioning part 5111 and the second positioning part 6111 are engaged with each other. Thus, the inflow space 7 is formed by the first cutout part 5112 and the second cutout part 6112.

Then, as shown in FIG. 20, using a first mold 91 and a second mold 92, a resin is poured into the inflow space 7 from a resin gate 93 formed in the first mold 91 and fixed. The resin gate 93 may be formed in the second mold 92, or may be formed in both the first mold 91 and the second mold 92. The first molded member 5 and the second molded member 6 are thermally welded to each other by the joining member 8 more reliably by pouring the resin in a state in which the temperature is high enough not to deteriorate the resin.

In this way, the joint surface 81 between the first molded member 5 and the second molded member 6 is formed so as to extend along the flow path axis C1 of the flow path P1, and the nozzle housing 40 is formed.

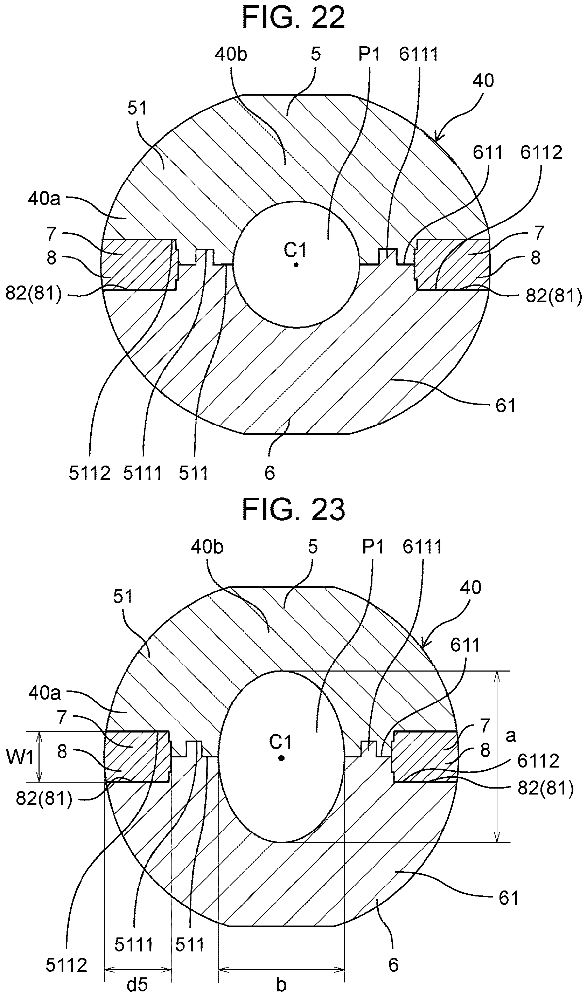

In the present embodiment, the resin is injected toward the back side of the inflow space 7. At this time, in order to easily apply the holding pressure, the inflow space 7 has a shape in which the width is narrowed and the depth is increased. Specifically, the depth d5 of the inflow space 7 (more specifically, the length in the width direction in FIG. 17) is about 1.27 mm, and the width W1 of the inflow space 7 (more specifically, the length in the vertical direction in FIG. 17, see FIG. 23) is about 1.0 mm. FIG. 17 is a diagram illustrating an example of the nozzle 4 according to the embodiment, and is a cross-sectional view taken along a plane orthogonal to the flow path axis C1. In the present embodiment, the width of the first contact surface 511 and the second contact surface 611 (more specifically, the length in the width direction in FIG. 17) is about 0.9 mm, and the width of the first positioning part 5111 and the second positioning part 6111 (more specifically, the length in the width direction in FIG. 17) is about 0.3 mm. The height and depth (more specifically, the length in the vertical direction in FIG. 17) of the first positioning part 5111 and the second positioning part 6111 are also about 0.3 mm.

When the first molded member 5 and the second molded member 6 are joined by thermal welding as in the present embodiment, it is preferable that the nozzle housing 40 is a resin molded product having an outer diameter cross-sectional area of 1.5cm² or less, and the ratio of the width W1 (see FIG. 23) of the inflow space 7 to the outer diameter of the nozzle housing 40 is 0.25 to 0.5.

As the resin used for forming the joining member 8, an amorphous resin or polypropylene is preferably used. Further, it is preferable to use a resin having a melt mass flow rate (hereinafter referred to as "MFR") of 7 or more.

Here, in the present embodiment, the flow path P1 formed when the first molded member 5 and the second molded member 6 are joined by the joining member 8 has the first narrowed flow path P13.

Specifically, the first narrowed flow path P13 having a small flow path cross-sectional area is formed by providing a protrusion in the recessed part of at least one of the first molded member 5 or the second molded member 6.

In the present embodiment, by forming a first protrusion 513 in the first recessed part 512, the first narrowed flow path P13 having a small flow path cross-sectional area is formed. Further, in the present embodiment, as shown in FIG. 21, a through hole is formed in the first protrusion 513, and the through hole serves as the first narrowed flow path P13. FIG. 21 is a diagram illustrating an example of the nozzle 4 according to the embodiment, and is a cross-sectional view of a part where the first narrowed flow path P13 is present, the cross-sectional view being taken along a plane orthogonal to the flow path axis C1.

In this way, when the nozzle housing 40 is formed by the above-described method, it is possible to more easily manufacture the nozzle housing 40 in which the flow path P1 having a complicated shape is formed.

In the present embodiment, the nozzle housing 40 is configured such that the tip side of the housing main body 42 downstream of the connection part 41 is divided into two. At this time, it is preferable that at least the root of the housing main body 42 (i.e. the root close to the connection part 41) is not divided. Specifically, as shown in FIG. 10, a part from the tip part 423 to a part where the first narrowed flow path P13 is formed is divided into two. FIG. 10 is a side view illustrating an example of the nozzle 4 according to the embodiment.

As shown in FIG. 22, the nozzle housing 40 may include a thick part 40a and a thin part 40b. FIG. 22 is a diagram illustrating a first modification of the nozzle 4 according to the embodiment, and is a cross-sectional view taken along a plane orthogonal to the flow path axis C1. At this time, when the thick part 40a is formed with the joint surface 81, the joining area of the joint surface 81 extending along the flow path axis C1 of the flow path P1 can be further widened, and thus the first molded member 5 and the second molded member 6 can be more reliably joined.

In FIG. 22, the thick part 40a is formed with the inflow space 7. In this case, since the depth d5 (see FIG. 23) of the inflow space 7 can be more reliably secured, the holding pressure can be easily applied, and the first molded member 5 and the second molded member 6 can be more reliably joined by the joining member 8.

In addition, as illustrated in FIG. 23, the nozzle housing 40 may include the thick part 40a and the thin part 40b by forming the flow path cross-sectional shape of the flow path P1 to be elongated in one direction. FIG. 23 is a diagram illustrating a second modification of the nozzle 4 according to the embodiment, and is a cross-sectional view taken along a plane orthogonal to the flow path axis.

FIG. 23 illustrates an example in which the flow path cross-sectional shape of the flow path P1 is an elliptical shape having a major axis a and a minor axis b. The thick part 40a is formed with the inflow space 7 so that the depth direction is along the minor axis b.

This makes it possible to more reliably ensure the depth d5 of the inflow space 7 without increasing the size of the appearance of the nozzle housing 40.

However, when the cross section of the pipeline is non-circular, the pipeline friction increases in proportion to the circumferential length. Therefore, the pressure loss due to the pipeline is proportional to (circumferential diameter / flow path cross-sectional area) of the pipeline cross section. Therefore, the ratio (a/b) of the major axis a to the minor axis b is preferably 1 to 2. In FIG. 23, the major axis a is about 3.4 mm, and the minor axis b is about 2.5 mm.

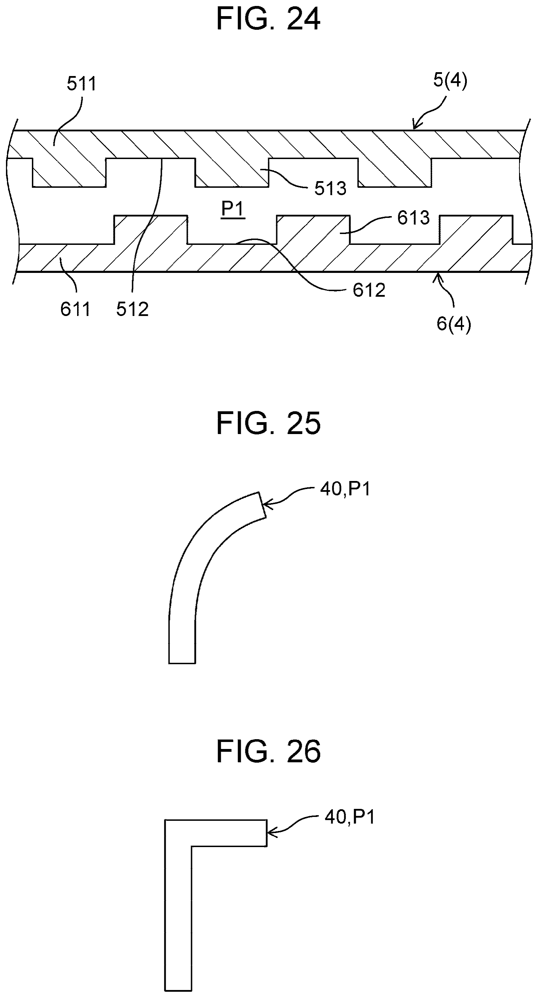

As shown in FIG. 24, the first protrusion 513 may be formed in the first recessed part 512, and the second protrusion 613 may be formed in the second recessed part 612. FIG. 24 is a diagram schematically illustrating an example of a nozzle that can be manufactured by an example of a method of manufacturing the nozzle 4. In this way, the shape of the flow path P1 can be made a complicated shape without complicating the appearance of the nozzle housing 40.

The shape of the appearance of the nozzle housing 40 and the shape of the flow path P1 of the nozzle housing 40 may be curved as shown in FIG. 25, or may be bent at 90 degrees as shown in FIG. 26. FIG. 25 is a diagram schematically illustrating an example of the appearance shape and the flow path shape of the nozzle 4 that can be manufactured by an example of the method of manufacturing the nozzle 4. FIG. 26 is a diagram schematically illustrating another example of the appearance shape and the flow path shape of the nozzle that can be manufactured by the example of the method of manufacturing the nozzle 4. As described above, the shape of the appearance of the nozzle housing 40 and the shape of the flow path P1 of the nozzle housing 40 can be various shapes.

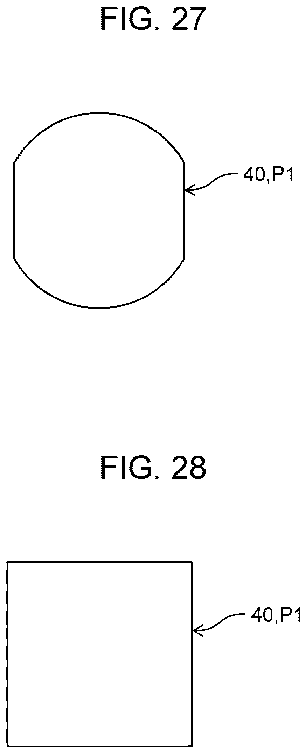

The cross-sectional shape of the nozzle housing 40 and the flow path cross-sectional shape of the flow path P1 may be a shape obtained by combining an arc and a straight line as shown in FIG. 27, or may be a rectangular shape as shown in FIG. 28. FIG. 27 is a diagram schematically illustrating an example of a cross-sectional shape of the appearance and the flow path of the nozzle 4 that can be manufactured by an example of the method of manufacturing the nozzle 4. FIG. 28 is a diagram schematically illustrating another example of a cross-sectional shape of the appearance and the flow path of the nozzle 4 that can be manufactured by an example of the method of manufacturing the nozzle 4.

The transverse cross-sectional shape of the nozzle housing 40 and the flow path cross-sectional shape of the flow path P1 can also be various shapes, for example, a triangular shape and a polygonal shape of a pentagon or more.

Further, the nozzle 4 may have a plurality of discharge ports P1b and a plurality of the first narrowed flow paths P13.

The configuration of the oral cavity cleaning device 100 is not limited to the configuration shown in the above embodiment, and various configurations can be adopted.

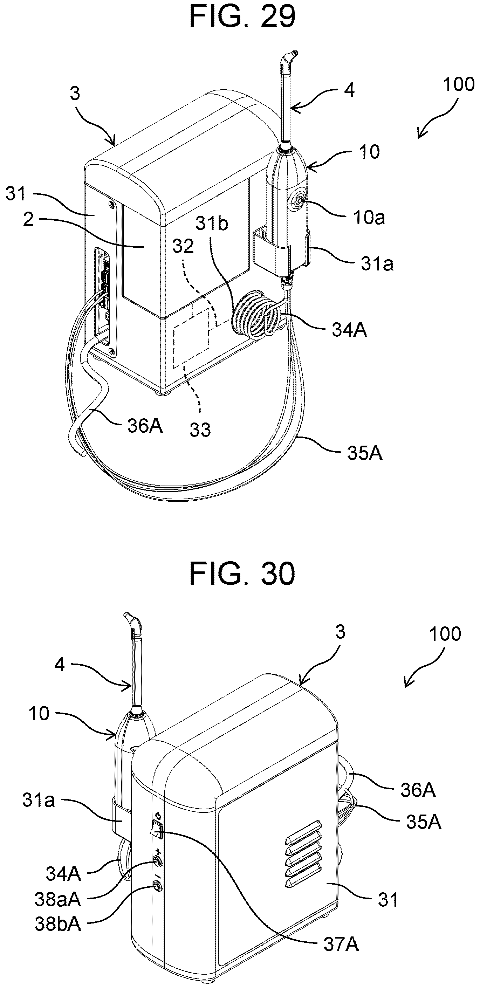

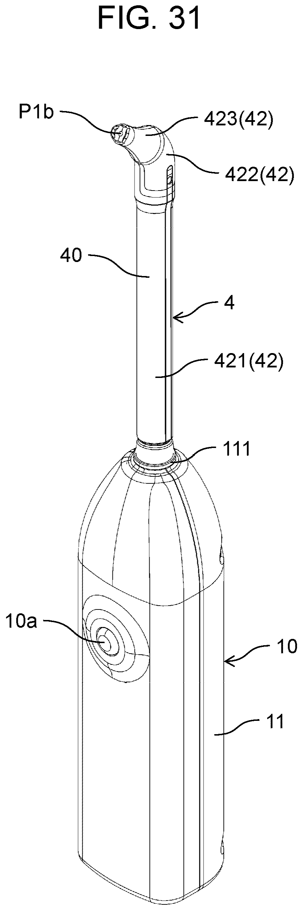

For example, the oral cavity cleaning device 100 shown in FIGS. 29 to 31 is possible. FIG. 29 is a perspective view of the oral cavity cleaning device 100 according to the first modification of the embodiment as viewed from one direction. FIG. 30 is a perspective view of the oral cavity cleaning device 100 according to the first modification of the embodiment as viewed from another direction. FIG. 31 is a perspective view illustrating the grip part 10 and the nozzle 4 according to the first modification of the embodiment. The oral cavity cleaning device 100 shown in FIGS. 29 to 31 includes the device main body 3 having the housing 31 (that is, an example of a case), a grip part 10 (that is, an example of a grip part) that can be gripped by a user with their hand, and the nozzle 4 (more specifically, a nozzle for the oral cavity cleaning device) attached to the grip part 10. The oral cavity cleaning device 100 is also a device that cleans the inside of the oral cavity by discharging (more specifically, jetting) a fluid (for example, a liquid) such as water from the discharge port P1b of the nozzle 4 and applying a liquid flow to teeth and gums in the oral cavity.

The device main body 3 includes the housing 31 (that is, an example of a case) and the liquid storage tank 2 (that is, an example of a liquid storage part) in which liquid can be stored, and has a substantially rectangular parallelepiped shape. The housing 31 (that is, an example of a case) and the liquid storage tank 2 can be formed using a material such as a synthetic resin, but are not limited thereto and can be formed using various materials.

The pump 33 is incorporated in the housing 31 (that is, an example of a case), and the liquid storage tank 2 and the hose 34A are connected to each other via the pump 33. The pump 33 is disposed in the liquid flow path 32, and has a function of sucking the liquid stored in the liquid storage tank 2 and discharging the liquid from the nozzle 4. Therefore, in the oral cavity cleaning device 100 shown in FIGS. 29 to 31, the liquid stored in liquid storage tank 2 is supplied to a hose 34A via the pump 33. Also in the oral cavity cleaning device 100 shown in FIGS. 29 to 31, the pump 33 shown in the above embodiment is used. Also in the oral cavity cleaning device 100 shown in FIGS. 29 to 31, the pump driving mechanism 34 shown in the above embodiment is used. At this time, the pump driving mechanism 34 including the assist mechanism 346 may be used, or the pump driving mechanism 34 not including the assist mechanism 346 may be used. However, the type of the pump is not particularly limited, and various types of pumps can be used as in the above-described embodiment.

The device main body 3 does not have to include the liquid storage tank 2. For example, a liquid such as tap water can be directly drawn from the outside.

In the oral cavity cleaning device 100 shown in FIGS. 29 to 31, the housing 31 (that is, an example of a case) is provided with a grip holding part 31a that holds the grip part 10 when the oral cavity cleaning device 100 (more specifically, the device main body 3) is not used, and a hose holding part 31b around which the hose 34A is wound and held. Further, inside the housing 31 (that is, an example of a case), a control board as a control unit that controls the operation of the pump 33 is installed.

A wire 35A and a power supply cord 36A are connected to the housing 31 (that is, an example of a case), and electric power for operating the pump 33 is supplied from an external power supply via the power supply cord 36A.

Further, as illustrated in FIG. 30, the housing 31 (that is, an example of the case) is provided with a power switch 37A that switches on and off the power and liquid pressure changeover switches 38aA and 38bA that switch the liquid pressure of the liquid discharged (more specifically, jetted) from the nozzle 4. Therefore, in the oral cavity cleaning device 100 shown in FIGS. 29 to 31, the liquid can be discharged (more specifically, jetted) from the nozzle 4 at a desired liquid pressure by operating the liquid pressure changeover switches 38aA and 38bA in a state where the power is turned on by operating the power switch 37A.

As shown in FIG. 29, the grip part 10 is connected to the housing 31 (that is, an example of a case) of the device main body 3 via the hose 34A. As shown in FIG. 31, the grip part 10 includes a housing 11 forming an outer shell. The housing 11 can be formed using, for example, an insulating synthetic resin material, and is formed by joining a plurality of divided bodies. A cavity is formed inside the housing 11 formed by joining the divided bodies, and various electric components are accommodated in the cavity.

Further, the grip part 10 includes an operation switch 10a, a part of which is exposed on the front surface side, and a user operates the operation switch 10a in a state of gripping the grip part 10, so that it is possible to switch on and off the ejection of the liquid.

A nozzle mounting part 111 is formed in the housing 11 of the grip part 10 so as to open upward, and the nozzle housing 40 (that is, one element of the nozzle 4) is mounted on the grip part 10 in an attachable and detachable manner by inserting and fitting the connection part 41 into the nozzle mounting part 111. When the nozzle housing 40 (that is, one element of the nozzle 4) is attached to the grip part 10, the flow path P1 in the nozzle housing 40 communicates with a flow path (not shown) formed in the housing 11 and communicating with the hose 34A. At this time, the nozzle 4 is preferably inserted into the nozzle mounting part 111 in a state of being sealed by, for example, packing.

Such an oral cavity cleaning device 100 can also achieve substantially the same operation and effect as those of the oral cavity cleaning device 100 described in the above embodiment.

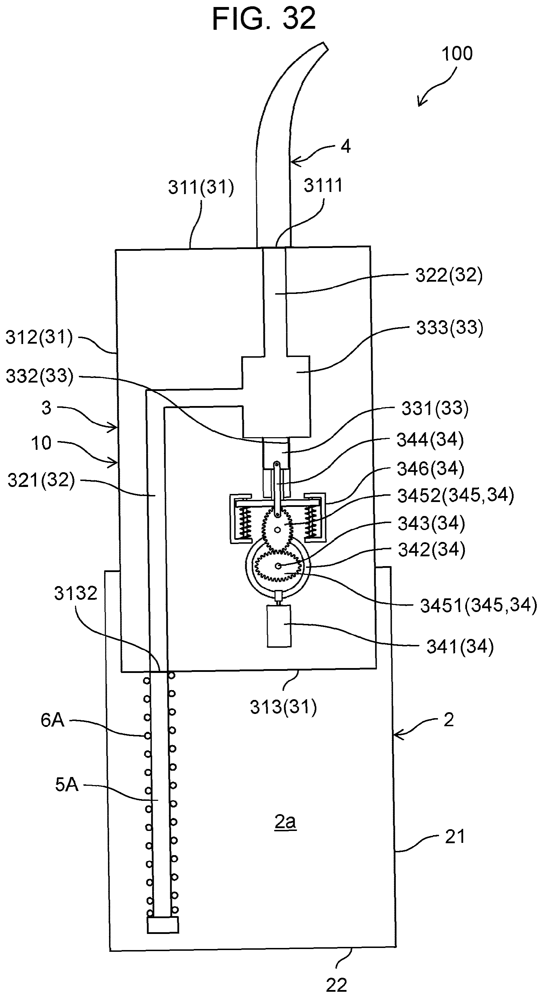

Further, the oral cavity cleaning device 100 shown in FIG. 32 may be used. FIG. 32 is a diagram schematically showing the oral cavity cleaning device 100 according to a second modification of the embodiment. The oral cavity cleaning device 100 shown in FIG. 32 includes the liquid storage tank 2, the device main body 3, and the nozzle 4.

The liquid storage tank 2 is formed in a bottomed cylindrical or hollow-prism shape that opens upward and is closed on the lower end side, and a storage part 2a in which liquid can be stored is formed inside the liquid storage tank 2. Although water can be used as the liquid stored in the storage part 2a, the liquid is not limited to water, and various liquids can be used. For example, it is possible to use a cleaning liquid in which a cleaning agent is mixed in water.

Further, the device main body 3 is supported by the liquid storage tank 2 in a state of being slidable in the vertical direction (that is, the longitudinal direction of the device main body 3). At this time, the device main body 3 is slidably supported by the liquid storage tank 2 in a state where at least the lower end side of the device main body 3 is disposed in the storage part 2a.

By sliding the device main body 3 to the lower side of the liquid storage tank 2 so that the device main body 3 is housed in the liquid storage tank 2. In this way, the oral cavity cleaning device 100 can be stored in a more compact state when not in use. Further, by sliding the device main body 3 to the upper side of the liquid storage tank 2 so that the device main body 3 is pulled out to the upper part of the liquid storage tank 2, more liquid can be supplied to the storage part 2a of the liquid storage tank 2. In a state where the device main body 3 is pulled out above the liquid storage tank 2, the nozzle 4 is attached to the device main body 3, and liquid is supplied to the storage part 2a of the liquid storage tank 2, so that the oral cavity cleaning device 100 can be used. Therefore, in the oral cavity cleaning device 100 shown in FIG. 32, the device main body 3 and the liquid storage tank 2 are the grip part 10 (that is, an example of a grip part) that can be gripped by a user with their hand.

As described above, the oral cavity cleaning device 100 shown in FIG. 32 is an oral cavity cleaning device of a liquid storage tank telescopic type in which the device main body 3 is slidably supported by the liquid storage tank 2 between the housed state in which the device main body 3 is housed in the liquid storage tank 2 and the drawn state in which the device main body 3 is drawn out from the liquid storage tank 2. That is, when the oral cavity cleaning device 100 is not used, the nozzle 4 is detached from the device main body 3, and the device main body 3 is pushed into the liquid storage tank 2 to be stored in the liquid storage tank 2. The oral cavity cleaning device 100 can be used by pulling out the device main body 3 from the liquid storage tank 2 and attaching the nozzle 4 to the device main body 3.

At this time, it is preferable that the device main body 3 is detachably supported by the liquid storage tank 2. That is, it is preferable that the device main body 3 can be detached from the liquid storage tank 2 by pulling the device main body 3 upward, or the device main body 3 can be attached to the liquid storage tank 2 by pushing the device main body 3 downward in a state where the lower end part of the device main body 3 is inserted into the liquid storage tank 2. This makes it possible to clean the liquid storage tank 2 and the device main body 3 in a separated state, so that the liquid storage tank 2 and the device main body 3 can be kept cleaner.

Further, the liquid storage tank 2 is formed of polypropylene resin so as to be washed by a dishwasher, and is formed in a transparent or translucent container shape in order to improve design. Further, the liquid storage tank 2 is formed to have a horizontal cross-sectional shape of a perfect circle so that the device main body 3 can be relatively rotated.

The liquid storage tank 2 includes a tubular body 21 having a substantially cylindrical or hollow-prism shape with upper and lower openings, and a bottom wall 22 that closes the lower opening of the tubular body 21. The side part (more specifically, the tubular body 21) of the liquid storage tank 2 is provided with a liquid supply hole (not shown) through which a liquid can be injected into the storage part 2a, and the liquid supply hole is closed by a liquid supply lid (not shown). In this way, even when the liquid storage tank 2 is laid down, the liquid can be supplied to the storage part 2a in the liquid storage tank 2.

On the other hand, the device main body 3 includes the housing 31 constituting an outer shell, and the housing 31 is formed in a cylindrical or hollow-prism shape in which both end sides in the vertical direction are closed. Further, the housing 31 (that is, an example of the device main body 3) is also formed to have a perfect circular cross-sectional shape so as to be rotatable relative to the liquid storage tank 2.

Therefore, in the oral cavity cleaning device 100 shown in FIG. 32, the housing 31 includes the substantially disk-shaped top wall 311, the substantially cylindrical or hollow-prism peripheral wall 312 extending downward from the outer peripheral edge of top wall 311, and the substantially disk-shaped bottom wall 313 provided to close the lower opening of the peripheral wall 312.

The top wall 311 is formed with the nozzle mounting part 3111 which is formed in a hollow elongated shape and to which the nozzle 4 configured to discharge (more specifically, jet) a liquid from the tip thereof is mounted in an attachable and detachable manner.

Further, the peripheral wall 312 is provided with a button (not shown) configured to detach the nozzle 4 from the housing 31 (that is, an example of the device main body 3) and a power switch (not shown) for starting or stopping the oral cavity cleaning device 100 (that is, switching between on and off of the power of the oral cavity cleaning device 100).

A tube attachment part 3132 to which the tube 5A is attached is formed at the bottom wall 313.

In the oral cavity cleaning device 100 shown in FIG. 32, the tube 5A is integrally attached to the tube attachment part 3132, and is disposed in the storage part 2a of the liquid storage tank 2 when the device main body 3 is slidably attached to the liquid storage tank 2. The liquid stored in the storage part 2a is introduced into the housing 31 (that is, into the device main body 3) through the tube 5A.

In addition, a coil spring 6A is disposed around the tube 5A to maintain a posture extending in the longitudinal direction of the tube 5A. By disposing such a coil spring 6A around the tube 5A, the tube 5A can be wound without being bent when the device main body 3 is housed in the liquid storage tank 2, and the tube 5A can be neatly housed in the liquid storage tank 2. Further, by disposing the coil spring 6A around the tube 5A, when the device main body 3 is pulled out from the liquid storage tank 2, the tube 5A can be smoothly extended from the wound state.

The liquid flow path 32 is formed inside the housing 31 (that is, an example of the device main body 3). The liquid flow path 32 allows the liquid introduced via the tube 5A to pass therethrough and to be supplied to the nozzle 4. In the oral cavity cleaning device 100 shown in FIG. 32, the liquid flow path 32 is provided in the housing 31 (that is, in device main body 3) such that one end thereof communicates with the inner space of the nozzle mounting part 3111 and the other end thereof communicates with the inner space of the tube attachment part 3132. Thus, the liquid introduced through the tube 5A is supplied to the nozzle 4 through the liquid flow path 32.

The liquid flow path 32 includes the suction path 321 disposed upstream of the liquid flow path 32 and the delivery path 322 disposed downstream of the liquid flow path 32. The suction path 321 and the delivery path 322 are connected to each other via the pump 33. A suction valve (not shown) is provided between the pump chamber 333 and the suction path 321, and a discharge valve (not shown) is provided between the pump chamber 333 and the delivery path 322.

The pump driving mechanism 34 is disposed inside the housing 31 (that is, an example of the device main body 3). When the pump 33 is operated by the pump driving mechanism 34, the liquid in the storage part 2a is sucked up by the tube 5A, is passed through the liquid flow path 32, and is discharged (more specifically, jetted) from the tip of the nozzle 4.

As described above, the oral cavity cleaning device 100 shown in FIG. 32 is a device that includes the pump 33 and the pump driving mechanism 34 that drives the pump 33, and discharges the liquid by driving the pump 33.

In the oral cavity cleaning device 100 shown in FIG. 32, the pump 33 includes the pump chamber 333 communicating with the suction path 321 and the delivery path 322, the cylinder 332 formed to communicate with the lower end of the pump chamber 333, and the piston 331 disposed in the cylinder 332.

The piston 331 is connected to the pump driving mechanism 34, and is linearly reciprocated in the vertical direction in the cylinder 332 by the pump driving mechanism 34. When the piston 331 is linearly reciprocated in the vertical direction in the cylinder 332, the volume of the pump chamber 333 changes.

Specifically, when the piston 331 moves downward in the cylinder 332, the volume of the pump chamber 333 increases, and the liquid in the liquid storage tank 2 flows into the pump chamber 333 via the tube 5A and the suction path 321. Thereafter, when the piston 331 moves upward in the cylinder 332 in a state where the liquid flows into the pump chamber 333, the volume of the pump chamber 333 decreases, and the liquid in the pump chamber 333 is supplied to the nozzle 4 via the delivery path 322. Then, the liquid supplied to the nozzle 4 is discharged (more specifically, jetted) from the tip of the nozzle 4 to the outside.

As described above, in the oral cavity cleaning device 100 shown in FIG. 32, the suction step of sucking the liquid into the pump chamber 333 is performed by moving the piston 331 downward in the cylinder 332, and the delivery step of delivering the liquid from the pump chamber 333 to the outside is performed by moving the piston 331 upward. That is, the piston 331 linearly reciprocates between an uppermost position and a lowermost position, so that the suction step and the delivery step are alternately performed. Therefore, when the piston 331 reciprocates once in the vertical direction from the uppermost position, the suction step and the delivery step are performed once.

With such a configuration, the liquid is intermittently discharged from the tip of the nozzle 4 attached to the device main body 3.

The pump driving mechanism 34 includes the motor 341, and by driving the motor 341, the piston 331 reciprocates linearly in the vertical direction in the cylinder 332.

Specifically, the pump driving mechanism 34 includes the motor 341 and the conversion mechanism 344 that converts a rotational motion of the motor 341 into a reciprocating linear motion. The piston 331 is connected to the conversion mechanism 344, and the piston 331 linearly reciprocates in the vertical direction in the cylinder 332. The motor 341 is driven by power supplied from a battery (for example, a rechargeable battery or a dry battery) accommodated in the device main body 3, from an external power.

Furthermore, in the oral cavity cleaning device 100 shown in FIG. 32, the pump driving mechanism 34 includes the deceleration mechanism 342 that decelerates the rotational speed of the motor 341, and transmission mechanism 343 that transmits the rotational motion decelerated by the deceleration mechanism 342 to the conversion mechanism 344. Therefore, in the oral cavity cleaning device 100 shown in FIG. 32, the rotation speed (that is, the number of rotations per unit time) of the motor 341 is converted into the reciprocating linear motion by the conversion mechanism 344 in a state where the rotation speed is reduced to a predetermined rotation speed (that is, the number of rotations per unit time) by the deceleration mechanism 342.

Also in the oral cavity cleaning device 100 shown in FIG. 32, the oral cavity can be cleaned more efficiently.

Specifically, the pump driving mechanism 34 includes the speed change mechanism 345 that makes the moving speed of the piston 331 when the delivery step is performed different from the moving speed of the piston 331 when the suction step is performed. The piston 331 is reciprocated once so that the time required for the delivery step is shorter than the time required for the suction step.

Also in the oral cavity cleaning device 100 shown in FIG. 32, the pump driving mechanism 34 includes the speed change mechanism 345 that makes the moving speed of the piston 331 when the delivery step is performed different from the moving speed of piston 331 when the suction step is performed. The speed change mechanism 345 has the elliptical gears 3451 and 3452 as non-circular gears, and the speed change mechanism 345 is constituted by the two elliptical gears 3451 and 3452.

Further, also in the oral cavity cleaning device 100 shown in FIG. 32, the pump driving mechanism 34 includes the assist mechanism 346 for assisting movement of the piston 331.

Such an oral cavity cleaning device 100 can also achieve substantially the same operations and effects as those of the oral cavity cleaning device 100 described in the above embodiment and the modification thereof.

In the oral cavity cleaning device 100 shown in FIG. 32, the pump driving mechanism 34 similar to the pump driving mechanism 34 shown in the above embodiment (that is, pump driving mechanism 34 including assist mechanism 346) is exemplified. However, the pump driving mechanism 34 not including assist mechanism 346 may be employed. The type of the pump is not particularly limited, and various types of pumps can be used as in the above embodiment.

FIG. 32 shows an example of the oral cavity cleaning device 100 of a tank telescopic type in which the device main body 3 is pulled out by rotating the device main body 3 relative to the liquid storage tank 2, but the present invention is not limited to such a configuration. For example, it is possible to provide an oral cavity cleaning device of a tank telescopic type in which the device main body 3 is pulled out by pulling the device main body 3 in a sliding direction.

### [Functions and Effects]

Characteristic configurations of the nozzle for an oral cavity cleaning device and the oral cavity cleaning device shown in the above embodiment and modifications thereof and effects obtained thereby will be described below.

(Technique 1) The nozzle 4 (more specifically, a nozzle for an oral cavity cleaning device) described in the above embodiment and the modification thereof includes the nozzle housing 40 in which the flow path P1 having the inflow port P1a and the discharge port P1b is formed.

The nozzle 4 is configured such that a fluid (for example, a liquid such as water or a gas such as air) introduced into the flow path P1 from the inflow port P1a and having a pressure of 1 MPa or more and 4 MPa or less is discharged from the discharge port P1b with a discharge load of 0.19 N or more and 0.38 N or less.

By using the nozzle 4 having such a configuration, it is possible to further improve the dirt removal effect, and thus it is possible to further improve the cleaning effect in the oral cavity.

As described above, in the embodiment and the modification thereof, it is possible to obtain the nozzle 4 (more specifically, a nozzle for an oral cavity cleaning device) with which the cleaning effect in the oral cavity can be further improved.

(Technique 2) In addition, in the technique 1 described above, the flow path P1 may include the introduction flow path P12 (that is, an example of the first flow path) and the first narrowed flow path (more specifically, the orifice part) P13 which is continuously provided downstream of the introduction flow path P12 (that is, an example of the first flow path) and has a flow path cross-sectional area smaller than that of the introduction flow path P12 (that is, an example of the first flow path). In addition, the flow path P1 may include a widened flow path P14 (more specifically, a compression chamber) which is continuously provided downstream of the first narrowed flow path P13 and has a flow path cross-sectional area larger than that of the first narrowed flow path P13, and a second narrowed flow path P15 (more specifically, a discharge flow path) which is continuously provided downstream of the widened flow path P14 and has a flow path cross-sectional area smaller than that of the widened flow path P14.

This makes it possible to lose the pressure more efficiently, and to discharge the fluid (for example, a liquid such as water or a gas such as air) more reliably from the discharge port P1b at a discharge load of 0.19 N or more and 0.38 N or less.

In addition, since the first narrowed flow path is provided in the middle of the flow path P1, it is possible to diffuse a gas such as air drawn into the flow path P1. In this way, the liquid and the gas can be more efficiently pressurized and dissolved or mixed, and the generation of droplets, fine bubbles, and cavitation bubbles can be increased. As a result, it is possible to increase shear force, pressure fluctuation, and vibration generated when the fluid discharged from the discharge port P1b is applied to a cleaning surface such as a tooth surface. That is, it is possible to further increase the force of removing the dirt attached to the tooth surface. As a result, the cleaning power is increased, and the cleaning effect in the oral cavity can be further improved.

(Technique 3) In the above technique 2, the nozzle housing 40 may include the first flow path forming part 424 in which the introduction flow path P12 (that is, an example of the first flow path) is formed, and the second flow path forming part 425 in which the first narrowed flow path P13 is formed. Further, the nozzle housing 40 may include the third flow path forming part 426 in which the widened flow path P14 is formed. The second flow path forming part 425 may be formed integrally with at least one flow path forming part of the first flow path forming part 424 or the third flow path forming part 426.

In this way, it is not necessary to form the first narrowed flow path P13 by inserting a separate component into the flow path P1, and thus it is possible to more easily obtain the nozzle 4 having the first narrowed flow path P13. In addition, in a case where the first narrowed flow path P13 is formed using a separate component, a fine gap is formed in the flow path P1, a useless pressure loss occurs, and there is a concern that the cleaning power may be reduced. However, when the second flow path forming part 425 is formed integrally with at least one flow path forming part of the first flow path forming part 424 or the third flow path forming part 426, it is possible to more reliably suppress the formation of a fine gap in the flow path P1, and it is possible to more reliably suppress the occurrence of unnecessary pressure loss. As a result, a decrease in cleaning power can be suppressed as much as possible.

Since the second flow path forming part 425 is formed integrally with at least one flow path forming part of the first flow path forming part 424 or the third flow path forming part 426, the strength of the nozzle housing 40 can be further improved. As a result, even when the fluid is introduced from the inflow port P1a into the flow path P1 at a high pressure of 1 MPa or more and 4 MPa or less, it is possible to more reliably suppress deformation and damage of the nozzle housing 40.

(Technique 4) In the technique 3, the second flow path forming part 425 may be formed of the same material as that of at least one flow path forming part of the first flow path forming part 424 or the third flow path forming part 426.

In this way, it is possible to more reliably suppress the formation of an unintended unevenness and gap in the coupling part between the second flow path forming part 425 and at least one flow path forming part of the first flow path forming part 424 or the third flow path forming part 426, and it is possible to more reliably suppress the occurrence of unnecessary pressure loss. As a result, a decrease in cleaning power can be suppressed as much as possible.

(Technique 5) In any one of the techniques 2 to 4, the second narrowed flow path P15 may have a tapered shape in which the downstream side thereof is widened, and a taper angle θ may be 0 degrees or more and 5 degrees or less.

In this way, the fluid compressed in the widened flow path P14 and introduced into the second narrowed flow path P15 can be discharged from the discharge port P1b along the wall surface defining the second narrowed flow path P15. In this way, it is possible to more reliably prevent the fluid from being discharged only from the central part of the discharge port P1b and the fluid having a core from being applied to the cleaning surface such as the tooth surface. As a result, it is possible to more reliably suppress a decrease in cleaning efficiency due to the application of the fluid only to a narrow range, or a decrease in sensory evaluation during use due to an increase in surface pressure.

In this way, when the shape of the second narrowed flow path P15 is a tapered shape in which the downstream side thereof is wide and the taper angle θ is 0 degrees or more and 5 degrees or less, the fluid can be applied to a wider range of the cleaning surface such as the tooth surface in a state in which the cleaning power (e.g., the dirt removal efficiency) is maintained. That is, a fluid having high cleaning power (that is, an example of the dirt removal efficiency) can be applied to a wider range. Therefore, the oral cavity can be cleaned more effectively and efficiently.

(Technique 6) The oral cavity cleaning device 100 described in the above embodiment and the modifications thereof includes the nozzle 4 (more specifically, the oral cavity cleaning device nozzle) described in any one of the technique 1 to the technique 5, and the grip part 10 (that is, an example of the grip part) to which the nozzle 4 (more specifically, the nozzle for the oral cavity cleaning device) is attached.

In this way, the oral cavity cleaning device 100 with which the cleaning effect in the oral cavity can be further improved can be obtained. Specifically, it is possible to obtain the oral cavity cleaning device 100 in which the action and effect shown in any one of the technique 1 to the technique 5 described above are exhibited.

(Technique 7) In the technique 6, the oral cavity cleaning device 100 may further include the liquid storage tank 2 in which a liquid is stored, the pump 33 that sucks the liquid stored in the liquid storage tank 2 and delivers the liquid to the nozzle 4, and the pump driving mechanism 34 that drives the pump 33. The pump 33 may include the piston 331 that linearly reciprocates in one direction.

In addition, the pump 33 may reciprocate the piston 331 linearly by using the pump driving mechanism 34 so that a suction step in which the liquid is sucked into the pump 33 and a delivery step in which the liquid is delivered from the pump 33 are alternately performed. The piston 331 may be reciprocated once so that the time required for the suction step and the time required for the delivery step are different from each other.

This makes it possible to discharge the liquid with a water flow different from that in the case where the ratio of the time required for the delivery step to the time required for the suction step is 1:1. As a result, the oral cavity can be cleaned more efficiently.

### [Others]

Although the contents of the nozzle for an oral cavity cleaning device and the oral cavity cleaning device according to the present disclosure have been described above, the above-described embodiment and modifications thereof are intended to exemplify the technique in the present disclosure. Therefore, various changes, substitutions, additions, and omissions can be made within the scope of the claims or the scope of their equivalents.

For example, it is possible to provide a nozzle for an oral cavity cleaning device and an oral cavity cleaning device in which the configurations described in the above embodiment and the modifications thereof are appropriately combined.

Further, in the above-described embodiment and modification examples thereof, the oral cavity cleaning device is exemplified in which the liquid storage tank 2 (that is, an example of the liquid storage part) is formed in the grip part 10 (that is, an example of the grip part), power supply means such as a rechargeable battery is incorporated in the grip part 10 (that is, an example of the grip part), and the oral cavity cleaning device can be used without using an external power supply. However, the configuration of the oral cavity cleaning device is not limited to such a configuration, and various configurations are possible.

For example, the oral cavity cleaning device 100 may be configured such that power for operating the pump 33 is supplied from an external power supply via the power supply cord 36A.

It is also possible to apply the above-described configuration to an oral cavity cleaning device having a configuration other than the oral cavity cleaning device 100 described in the above-described embodiment and the modifications thereof.

In addition, specifications (shape, size, and layout) of the nozzle housing, the grip part, and other details can be appropriately changed.

### INDUSTRIAL APPLICABILITY

As described above, the nozzle for an oral cavity cleaning device and the oral cavity cleaning device according to the present disclosure can further improve the cleaning effect of the oral cavity, and thus can be used for various types of nozzles for an oral cavity cleaning device and oral cavity cleaning devices for home use and business use.

### REFERENCE SIGNS LIST

- 100: oral cavity cleaning device
- 10: grip part
- 10a: operation switch
- 11: housing
- 111: nozzle mounting part
- 2: liquid storage tank
- 2a: storage part
- 21: tubular body
- 211: liquid supply lid
- 22: bottom wall
- 221: bottom surface
- 3: device main body
- 31: housing
- 31a: grip holding part
- 31b: hose holding part
- 311: top wall
- 3111: nozzle mounting part
- 312: peripheral wall
- 3121: recessed part
- 313: bottom wall
- 3131: bottom surface
- 3132: tube attachment part
- 32: liquid flow path
- 321: suction path
- 3211: tube
- 322: delivery path
- 3221: tube
- 33: pump
- 331: piston
- 34: pump driving mechanism
- 332: cylinder
- 333: pump chamber
- 34: pump driving mechanism
- 34A: hose
- 341: motor
- 3411: motor shaft
- 342: deceleration mechanism
- 3421: pinion gear
- 3422: deceleration gear
- 3423: first output shaft
- 343: transmission mechanism
- 3431: first transmission gear
- 3432: second transmission gear
- 3433: second output shaft
- 344: conversion mechanism
- 3441: first gear
- 3442: second gear
- 3443: third output shaft
- 3444: cam
- 3445: screw
- 3446: rod
- 34461: connecting shaft
- 345: speed change mechanism
- 3451: elliptical gear
- 3452: elliptical gear
- 346: assist mechanism
- 3461: spring support
- 3462: coil spring
- 3463: pair of shaft
- 3464: slider
- 34641: pressing part
- 35A: wire
- 36A: power supply cord
- 37A: power switch
- 38aA: liquid pressure changeover switch
- 38bA: liquid pressure changeover switch
- 4: nozzle
- 40: nozzle housing
- 40a: thick part
- 40b: thin part
- 41: connection part
- 411: inner wall surface
- 42: housing main body
- 421: stem part
- 422: curved part
- 423: tip part
- 424: first flow path forming part
- 4241: first inner wall surface
- 42411: upstream side inclined surface
- 42412: downstream inclined surface
- 425: second flow path forming part
- 4251: second inner wall surface
- 426: third flow path forming part
- 4261: third inner wall surface
- 42611: upstream vertical surface
- 42612: downstream vertical surface
- 427: fourth flow path forming part
- 4271: fourth inner wall surface
- 42711: first cross-sectional line
- 42712: second cross-sectional line
- 4A1: pressure gauge
- 4A2: connection jig
- 5: first molded member
- 51: first wall part
- 511: first contact surface
- 5111: first positioning part
- 5112: first cutout part
- 512: first recessed part
- 513: first protrusion
- 5A: tube
- 6: second molded member
- 6A: coil spring
- 61: second wall part
- 611: second contact surface
- 6111: second positioning part
- 6112: second cutout part
- 612: second recessed part
- 7: inflow space
- 81: joint surface
- 82: thermally welded part
- 91: first mold
- 92: second mold
- 93: resin gate
- a: major axis
- b: minor axis
- C1: flow path axis
- D: maximum delivery amount
- d1: diameter
- d2: diameter
- d3: diameter
- d4: diameter
- d5: depth
- L: length
- L2: length
- L3: length
- L4: length
- P1: flow path
- P1a: inflow port
- P1b: discharge port
- P12: introduction flow path
- P13: first narrowed flow path
- P14: widened flow path
- P15: second narrowed flow path
- W1: width
- θ: taper angle

## Claims

1. A nozzle for an oral cavity cleaning device, the nozzle comprising
a nozzle housing in which a flow path having an inflow port and a discharge port is formed,
wherein
the nozzle is configured such that a fluid introduced into the flow path from the inflow port and having a pressure of 1 MPa or more and 4 MPa or less is discharged from the discharge port at a discharge load of 0.19 N or more and 0.38 N or less.

2. The nozzle for the oral cavity cleaning device according to Claim 1, wherein
the flow path includes:
a first flow path;
a first narrowed flow path provided continuously downstream of the first flow path and having a flow path cross-sectional area smaller than that of the first flow path;
a widened flow path provided continuously downstream of the first narrowed flow path and having a flow path cross-sectional area larger than that of the first narrowed flow path; and
a second narrowed flow path provided continuously downstream of the widened flow path and having a flow path cross-sectional area smaller than that of the widened flow path.

3. The nozzle for the oral cavity cleaning device according to Claim 2, wherein
the nozzle housing includes:
a first flow path forming part in which the first flow path is formed;
a second flow path forming part in which the first narrowed flow path is formed; and
a third flow path forming part in which the widened flow path is formed, and
the second flow path forming part is formed integrally with at least one flow path forming part of the first flow path forming part or the third flow path forming part.

4. The nozzle for the oral cavity cleaning device according to Claim 3, wherein
the second flow path forming part is formed of the same material as that of at least one flow path forming part of the first flow path forming part or the third flow path forming part.

5. The nozzle for the oral cavity cleaning device according to Claim 2, wherein
the second narrowed flow path has a tapered shape in which the downstream side thereof is widen, and
the second narrowed flow path has a taper angle of 0 degrees or more and 5 degrees or less.

6. An oral cavity cleaning device comprising:
the nozzle for the oral cavity cleaning device according to any one of Claims 1 to 5; and
a grip part on which the nozzle for the oral cavity cleaning device is configured to be mounted in an attachable and detachable manner.

7. The oral cavity cleaning device according to Claim 6, further comprising:
a liquid storage tank configured to store a liquid;
a pump configured to suck the liquid stored in the liquid storage tank and deliver the liquid to the nozzle for the oral cavity cleaning device; and
a pump driving mechanism configured to drive the pump,
wherein
the pump includes a piston configured to reciprocate linearly in one direction,
the pump driving mechanism is configured to reciprocate the piston linearly to alternately perform a suction step of sucking the liquid into the pump and a delivery step of delivering the liquid from the pump, and
the piston is configured to be reciprocated once in such a manner that a time required for the suction step is different from a time required for the delivery step.
